(19) Europäisches Patentamt / European Patent Office / Office européen des brevets

(11) **EP 4 020 379 B1**

(12) **FASCICULE DE BREVET EUROPEEN**

(45) Date de publication et mention
de la délivrance du brevet:
**10.04.2024 Bulletin 2024/15**

(21) Numéro de dépôt: **21210698.3**

(22) Date de dépôt: **26.11.2021**

(51) Classification Internationale des Brevets (IPC):
**G06T 5/00** (2024.01)

(52) Classification Coopérative des Brevets (CPC):
**G06T 5/70;** G06T 2207/10056; G06T 2207/20221

(54) **PROCÉDÉ DE TRAITEMENT D'IMAGE POUR L'OBTENTION D'UNE IMAGE SUPER-RÉSOLUE ET D'UN DIFFRACTOGRAMME SUPER-RÉSOLU**

BILDVERARBEITUNGSVERFAHREN ZUR ERLANGUNG EINES SUPERAUFGELÖSTEN BILDES UND EINES SUPERAUFGELÖSTEN DIFFRAKTOGRAMMS

IMAGE PROCESSING METHOD FOR OBTAINING A SUPER-RESOLUTE IMAGE AND A SUPER-RESOLUTE DIFFRACTOGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2020 FR 2013933**

(43) Date de publication de la demande:
**29.06.2022 Bulletin 2022/26**

(73) Titulaire: **Commissariat à l'énergie atomique et aux énergies alternatives
75015 Paris (FR)**

(72) Inventeur: **GUEDJ, Cyril
38054 GRENOBLE CEDEX 09 (FR)**

(74) Mandataire: **Brevalex
Tour Trinity
1 B Place de la Défense
92400 Courbevoie (FR)**

(56) Documents cités:
**EP-A1- 0 893 783      WO-A1-2005/055145**

- **CLAVEAU RÉMY ET AL: "Structure-dependent amplification for denoising and background correction in Fourier ptychographic microscopy", OPTICS EXPRESS, vol. 28, no. 24, 23 novembre 2020 (2020-11-23), page 35438, XP055831844, US ISSN: 1094-4087, DOI: 10.1364/OE.403780**
- **SMAL I ET AL: "Quantitative Comparison of Spot Detection Methods in Fluorescence Microscopy", IEEE TRANSACTIONS ON MEDICAL IMAGING, IEEE SERVICE CENTER, PISCATAWAY, NJ, US, vol. 5, no. 2, 1 février 2010 (2010-02-01), pages 282-301, XP011294426, ISSN: 0278-0062**

**Description**

**DOMAINE TECHNIQUE**

L'invention se situe dans le domaine du traitement d'images. Elle s'applique notamment au domaine du traitement d'images de microscopies pour l'analyse des propriétés physiques de matériaux ou de dispositifs. Les images peuvent notamment être des images de microscopie à résolution atomique, c'est-à-dire de résolution spatiale inférieure ou égale à 2 nanomètres. Elles peuvent être obtenues par tout type de microscopie à très haute résolution, notamment la microscopie électronique en transmission, la microscopie à force atomique, la microscopie à effet tunnel et la microscopie ionique à effet de champ. Plus généralement, elle s'applique à toute image de dimension supérieure ou égale à deux comportant des gouttes ou taches ou spots, également appelés « spikes » en anglais, qui se détachent du fond continu. Par définition, une goutte est une région d'un hyperespace dans laquelle une propriété la distingue du bruit ambiant. Une tache est une goutte à 2 dimensions. Un point est une goutte comportant un seul élément.

L'invention concerne un procédé de traitement d'une image initiale représentant un ensemble de gouttes, l'image initiale étant formée d'un ensemble de points définissant un n-hyperpavé dans un espace à $n$ dimensions, $n$ étant un entier supérieur ou égal à deux. Le procédé comprend un ensemble d'étapes permettant in fine de construire une image et/ou un diffractogramme super-résolus spatialement.

**ÉTAT DE LA TECHNIQUE ANTÉRIEURE**

La super-résolution désigne une famille de techniques qui consistent à améliorer la résolution d'une image ou d'un système d'acquisition. Elle regroupe à la fois des méthodes matérielles qui visent à contourner les problèmes optiques et les difficultés physiques rencontrées lors de l'acquisition d'image, et des techniques algorithmiques qui, à partir d'une ou de plusieurs images déjà capturées, créent une image de meilleure résolution. Contrairement aux techniques d'interpolation, les pixels intermédiaires manquants sont déterminés au moyen de méthodes prédictives élaborées ajoutant de l'information à l'image initiale.

Historiquement, la microscopie à super-résolution a été développée dans le domaine de l'optique, c'est-à-dire avec un faisceau incident constitué de photons. L'article L. Schermelleh et al : « Super-resolution microscopy demystified », Nature Cell Biology, vol. 21, p. 72-84, 2019, présente les derniers développements de cette technique. La microscopie à super-résolution optique consiste à surpasser la barre de résolution de 250 nm classiquement imposée par la résolution limite d'Abbe (critère de Rayleigh). Néanmoins, aucune des techniques de super-résolution optique ne présente de résolution atomique apte à permettre l'identification de la présence des atomes individuels et leur localisation précise dans la matière. Or ces informations sont requises pour comprendre la structure des petits défauts, les mécanismes réactionnels aux interfaces et les processus de fiabilité et de vieillissement, entre autres.

L'article R. Claveau et al : "Structure-dependent amplification for denoising and background correction in Fourier ptychographic microscopy", Optics express, vol. 28, no. 24, 2020, divulgue une méthode de débruitage en microscopie pour des images contenant des gouttes, impliquant la construction d'une image seuillée.

La publication WO 2005/055145 A1 divulgue la détection de gouttes dans des images microscopiques notamment en classifiant les gouttes en différents types.

Dans le domaine de la microscopie à très haute résolution, les développements les plus récents ont principalement porté sur l'amélioration de la résolution instrumentale brute, par exemple en développant des correcteurs d'aberrations dans le cas des microscopes électroniques à transmission. Dans des applications telles que la caractérisation des matériaux, de dispositifs électroniques ou optoélectroniques ou dans le domaine des matériaux pour toute application en général, il peut s'avérer indispensable de procéder à des analyses très fines de structure, par exemple pour cartographier des défauts ponctuels, en lien avec les propriétés physiques (mécaniques, électriques, optiques, magnétiques, etc.) des matériaux et dispositifs analysés, notamment aux interfaces critiques. Pour cartographier des défauts minuscules tels que les impuretés interstitielles, il est nécessaire d'utiliser des outils de caractéristation de résolution spatiale décapicométrique, voire picométrique. Or les meilleurs microscopes actuels atteignent difficilement une résolution spatiale de 50 picomètres.

Un but de l'invention est donc de proposer une technique de traitement d'image permettant d'améliorer la résolution spatiale. L'image ainsi traitée peut également être convertie en un diffractogramme super-résolu.

**EXPOSÉ DE L'INVENTION**

À cet effet, l'invention repose sur un processus d'enrichissement de l'image en la modifiant pour qu'elle converge vers une image plus proche d'une image théorique « parfaite », c'est-à-dire l'image qui serait obtenue par un code de simulation physiquement réaliste et qui serait proche de l'image initiale.

Plus précisément, l'invention a pour objet un procédé de traitement d'une image initiale formée d'un ensemble de points définissant un n-hyperpavé dans un espace à $n$ dimensions, $n$ étant un entier supérieur ou égal à deux, chaque point étant associé à une valeur numérique, l'image initiale comprenant un ensemble de gouttes se détachant du bruit. Selon l'invention, le procédé comprend :

- une étape de construction d'une image seuillée, dans laquelle la valeur de chaque point de l'image seuillée prend la valeur nulle si la valeur du point correspondant dans l'image initiale est inférieure à un seuil prédéterminé, et prend la valeur du point correspondant dans l'image initiale sinon, et
- une étape d'enrichissement de l'image seuillée donnant une image enrichie, ladite étape comprenant :

  ◦ une sous-étape de décomposition de l'image seuillée en une ou plusieurs sous-images élémentaires, chaque sous-image élémentaire comprenant l'ensemble des gouttes de l'image seuillée correspondant à une classe de gouttes définie par un critère de tri prédéterminé,
  ◦ une sous-étape de détermination des centres des gouttes, dans laquelle, dans chacune des sous-images élémentaires, le centre de chaque goutte est déterminé,
  ◦ une sous-étape de construction de sous-images idéalisées, dans laquelle une sous-image idéalisée est construite pour chaque sous-image élémentaire, chaque sous-image idéalisée comprenant une goutte idéalisée de la classe de gouttes considérée générée au niveau du centre de chaque goutte de la sous-image élémentaire correspondante,
  ◦ une sous-étape de fusion des sous-images idéalisées, dans laquelle les différentes sous-images idéalisées sont fusionnées pour former une image idéalisée, et
  ◦ une sous-étape de construction de l'image enrichie, dans laquelle l'image idéalisée est fusionnée avec l'image seuillée pour former l'image enrichie.

Les gouttes idéalisées utilisées pour la construction des sous-images idéalisées intègrent avantageusement des informations relatives à la physique de l'objet imagé, par exemple la signature des atomes présents dans l'échantillon imagé. Ces informations se retrouvent ainsi intégrées aux sous-images enrichies et, in fine, à l'image enrichie.

L'image initiale peut être une image à résolution atomique, c'est-à-dire de résolution spatiale inférieure ou égale à 2 nanomètres.

Selon une forme particulière de réalisation, le critère de tri comprend au moins un critère relatif à un paramètre morphologique des gouttes, à leur surface, à leur valeur numérique moyenne ou à leur écart-type. Le paramètre morphologique peut notamment concerner l'ellipticité, l'orientation, le périmètre ou le diamètre de Féret des gouttes.

Dans chaque sous-image élémentaire, la valeur numérique d'un point peut prendre la valeur du point correspondant dans l'image seuillée lorsque ce point appartient à une goutte de la classe correspondante, et la valeur nulle sinon.

Selon une autre forme particulière de réalisation, l'étape d'enrichissement de l'image seuillée comprend, en outre, entre la sous-étape de détermination des centres des gouttes et la sous-étape de construction des sous-images idéalisées, une sous-étape de réalignement des centres des gouttes donnant des sous-images réalignées, dans laquelle chaque sous-image réalignée est obtenue par une transformation géométrique de la sous-image élémentaire correspondante, de sorte que les centres des gouttes soient alignés selon au moins un ensemble d'axes parallèles entre eux dans chaque sous-image réalignée. Les sous-images réalignées sont alors utilisées dans la suite du procédé à la place des sous-images élémentaires.

Selon encore une autre forme particulière de réalisation, le procédé de traitement selon l'invention comprend, en outre, une étape de construction d'un diffractogramme. Ladite étape de construction d'un diffractogramme comprend alors :

- une sous-étape d'ajout d'un pourtour périphérique, dans laquelle un pourtour périphérique formé d'un ensemble de points dans un espace à $n$ dimensions est ajouté à la périphérie de l'image enrichie pour donner une image augmentée, chaque point du pourtour périphérique étant associé à la valeur nulle, et
- une sous-étape d'application d'une transformée de type Fourier à l'image augmentée pour former le diffractogramme.

Le pourtour périphérique a pour effet d'augmenter la résolution spatiale du diffractogramme.

L'étape de construction d'un diffractogramme peut comprendre, en outre, postérieurement à la sous-étape d'application d'une transformée de type Fourier, une sous-étape de seuillage donnant un diffractogramme seuillé, dans laquelle la valeur de chaque point du diffractogramme seuillé prend la valeur nulle si la valeur du point correspondant dans le diffractogramme est inférieure à un seuil prédéterminé.

L'étape de construction d'un diffractogramme peut aussi comprendre, en outre, préalablement à la sous-étape d'application d'une transformée de type Fourier, une sous-étape d'érosion, dans laquelle une dimension de chaque goutte dans l'image enrichie est réduite. En particulier, chaque goutte peut être réduite à un unique point dont la position correspond au centre de gravité de la goutte.

Toujours selon une forme particulière de réalisation, le procédé de traitement comprend, en outre, préalablement à l'étape de construction d'une image seuillée, une étape de débruitage de l'image initiale donnant une image débruitée. Dans cette étape de débruitage, un traitement de débruitage est appliqué sur l'image initiale. L'image débruitée est alors utilisée dans la suite du procédé à la place de l'image initiale. En particulier, l'image débruitée peut être utilisée pour la construction d'une image seuillée.

L'étape de débruitage comprend par exemple une opération de convolution effectuée entre l'image initiale et un filtre de débruitage. Le filtre de débruitage peut notamment être formé d'un ensemble de points définissant un n-hyperpavé dans un espace à n dimensions, $n$ étant un entier supérieur ou égal à deux, chaque point du filtre étant associé à une valeur numérique. Le filtre comporte un premier sous-ensemble de points formant une n-boule et un deuxième sous-ensemble de points comprenant les points n'appartenant pas au premier sous-ensemble, la valeur des points du premier sous-ensemble étant déterminée, depuis le centre vers la périphérie de la n-boule, en fonction de coefficients calculés par une méthode d'approximation polynomiale de type Savitzky-Golay, et la valeur des points du deuxième sous-ensemble étant nulle.

Le procédé de traitement peut comporter, en outre, préalablement à l'étape de construction d'une image seuillée, une étape de correction de distorsion donnant une image réalignée. Dans cette étape, une transformation géométrique est appliquée sur l'image initiale ou, le cas échéant, sur l'image débruitée, afin de corriger des distorsions résiduelles de ladite image. L'image réalignée est alors utilisée dans la suite du procédé à la place de l'image initiale ou de l'image débruitée. La transformation géométrique est par exemple une transformation affine ou de type perspective, ou plus généralement une transformation élastique. De préférence, l'image est réalignée de manière à obtenir des alignements des gouttes dans l'image compatibles avec leur position théorique, ce qui facilite la suite du traitement.

Selon encore une autre forme particulière de réalisation, le procédé comprend, en outre, préalablement à l'étape de construction d'une image seuillée, une étape d'augmentation de la résolution de l'image initiale, donnant une image super-résolue. Dans cette étape d'augmentation de la résolution, l'image super-résolue est générée en augmentant la résolution spatiale de l'image initiale ou, le cas échéant, de l'image débruitée ou l'image réalignée. L'image super-résolue est alors utilisée dans la suite du procédé à la place de l'image initiale, de l'image débruitée ou de l'image réalignée.

L'augmentation de résolution peut notamment être réalisée par interpolation, à l'aide d'une technique de reconstruction de surface ou d'une technique de super-résolution telle que la méthode de variation totale, appelée « total variation » (TV) en anglais. Cette méthode consiste à réguler la création des nouveaux points sur la variation totale des contrastes de l'image originale. Cette approche permet de conserver les variations globales de contraste tout en préservant les bords des gouttes de l'image. La méthode de variation totale est notamment décrite dans la publication L. I. Rudin, S. Osher, and E. Fatemi, Nonlinear total variation based noise removal algorithms, Physica D, 60 (1), 259-268 (1992).

Selon une forme particulière de réalisation, le procédé comprend, en outre, préalablement à l'étape de construction d'une image seuillée, une étape de lissage de l'image initiale, donnant une image lissée. L'image lissée est alors utilisée dans la suite du procédé à la place de l'image initiale ou, le cas échéant, de l'image débruitée, de l'image réalignée ou de l'image super-résolue.

L'étape de lissage comprend par exemple une opération de convolution effectuée entre l'image initiale et un filtre de lissage. Le filtre de lissage peut notamment être formé d'un ensemble de points définissant un n-hyperpavé dans un espace à $n$ dimensions, $n$ étant un entier supérieur ou égal à deux, chaque point du filtre étant associé à une valeur numérique. Le filtre comporte un premier sous-ensemble de points formant une n-boule et un deuxième sous-ensemble de points comprenant les points n'appartenant pas au premier sous-ensemble, la valeur des points du premier sous-ensemble étant déterminée, depuis le centre vers la périphérie de la n-boule, en fonction de coefficients calculés par une méthode d'approximation polynomiale de type Savitzky-Golay, et la valeur des points du deuxième sous-ensemble étant nulle.

Les valeurs des points du filtre de débruitage peuvent être identiques ou différentes des valeurs respectives des points du filtre de lissage.

La méthode de Savitzky-Golay est décrite dans les publications originales suivantes : Savitzky, A., and Golay, M. J. E., (1964), Smoothing and différentiation of data by simplified least-squares procedures, Analytical Chemistry, 36, pp. 1627-1639 et P. A. Gorry, General least-squares smoothing and différentiation by the convolution (Savitzky-Golay) method, Anal. Chem. 62 (6) (1990) 570-573. Des généralisations de cette méthode ont été proposées par la suite, par exemple dans Thornley, David J., Anisotropic Multidimensional Savitzky Golay kernels for Smoothing, Différentiation and Reconstruction (PDF) (Technical report), Imperial College Department of Computing, 2066/8 (2006). Ces méthodes permettent de générer des coefficients d'un noyau de convolution permettant d'approximer localement une courbe, une surface ou un volume par son plus proche équivalent polynomial. Dans la suite, on appelle « méthode de type Savitzky-Golay » l'ensemble de ces méthodes, qui reposent toutes sur la même idée d'une approximation locale de la position des points par une expression analytique polynômiale.

Au sens de l'invention, une n-boule centrée en un point $P$ est définie comme un ensemble de points dont la distance par rapport au point $P$ est inférieure ou égale à un rayon $r$, où $r$ est un nombre réel. La distance est de préférence définie comme la distance euclidienne. Cette définition est classiquement utilisée en topologie analytique dans l'espace métrique euclidien usuel.

Selon une forme particulière de réalisation, la n-boule est centrosymétrique, les points situés à une même distance d'un centre de ladite n-boule étant associés à une même valeur.

Les coefficients calculés par la méthode de Savitzky-Golay peuvent notamment être des coefficients de lissage polynomial de degré 2 ou 3 ou des coefficients de lissage polynomial de degré 4 ou 5.

Dans un premier mode de réalisation, correspondant à un filtre de lissage polynomial de degré 2 ou 3, la valeur $F(i_1, i_2, ..., i_n)$ des points du filtre vaut zéro si $r > s$ et, si $r \leq s$, est proportionnelle à :

$$A_s(r) = 3s^2 + 3s - 1 - 5r^2$$

avec par définition

$s = (d - 1)/2$, où d représente le diamètre impair de la n-boule, et

$r = \sqrt{i_1^2 + i_2^2 + \cdots + i_n^2}$ , où $i_1, i_2 \ldots i_n$ définissent les $n$ indices d'éloignement par rapport au centre de la n-boule pour chaque dimension de l'espace du filtre, ces indices d'éloignement étant des nombres entiers variant entre $-s$ et $s$.

Dans un deuxième mode de réalisation, correspondant à un filtre de lissage polynomial de degré 4 ou 5, la valeur $F(i_1, i_2, ..., i_n)$ des points du filtre vaut zéro si $r > s$ et, si $r \leq s$, est proportionnelle à :

$$A_s(r) = (15s^4 + 30s^3 - 35s^2 - 50s + 12) - 35(2s^2 + 2s - 3)r^2 + 63r^4$$

avec par définition

$s = (d - 1)/2$, où $d$ représente le diamètre impair de la n-boule, et

$r = \sqrt{i_1^2 + i_2^2 + \cdots + i_n^2}$ , où $i_1, i_2 \ldots i_n$ définissent les $n$ indices d'éloignement par rapport au centre de la n-boule pour chaque dimension de l'espace du filtre, ces indices d'éloignement étant des nombres entiers variant entre $-s$ et $s$.

Selon une forme particulière de réalisation, le diamètre de la n-boule du filtre est inférieur ou égal à 150 % de la plus grande distance entre deux gouttes voisines et/ou égal au diamètre moyen d'une goutte recherchée. Lorsque plusieurs classes de gouttes sont présentes dans l'image, le diamètre de la n-boule peut être égal au diamètre moyen des plus petites gouttes recherchées.

Selon une autre forme particulière de réalisation, l'étape de débruitage et/ou l'étape de lissage comprennent chacune, préalablement à l'opération de convolution, une opération de transformation géométrique du filtre, dans laquelle les points du premier sous-ensemble subissent une transformation géométrique. La transformation géométrique peut notamment comprendre une rotation des points du premier sous-ensemble autour du centre de la n-boule, une dilatation ou une compression selon l'un des axes de la n-boule, une transformation de type cisaillement, une transformation de type perspective, un gauchissement ou une torsion. La transformation géométrique peut également comprendre un décentrage de la n-boule obtenu en augmentant la taille de l'hyperpavé englobant la n-boule puis en translatant la n-boule à l'intérieur de l'hyperpavé. La transformation géométrique peut notamment être agencée de manière à ce que la n-boule prenne une forme d'ovoïde. Une telle forme d'ovoïde est particulièrement appropriée lorsque chaque goutte de l'image initiale est constituée de deux spots partiellement superposés dans l'image initiale. Plus généralement, la transformation géométrique peut être agencée de manière à ce que la n-boule prenne une forme correspondant à la forme des gouttes de l'image initiale après son altération par les systèmes d'acquisition instrumentaux. Cette forme de référence peut être obtenue en moyennant un grand nombre de gouttes élémentaires de référence obtenues dans des images expérimentales, ou en réalisant des simulations de gouttes théoriques au moyen de logiciels spécialisés.

Le procédé de traitement selon l'invention peut également comporter, préalablement à l'étape de construction d'une image seuillée, une étape de soustraction de fond continu donnant une image soustraite. L'image soustraite est alors utilisée dans la suite du procédé à la place de l'image initiale ou, le cas échéant, de l'image débruitée, de l'image réalignée, de l'image super-résolue ou de l'image lissée. La valeur de chaque point de l'image soustraite est alors égale à la valeur du point correspondant dans l'image initiale soustraite de la valeur du point correspondant dans une image de fond continu. L'image de fond continu est par exemple obtenue par toute méthode connue dans l'état de l'art ou par convolution de l'image initiale avec un filtre tel que décrit précédemment. De préférence, le diamètre de la n-boule du filtre est égal à la distance maximale entre deux gouttes voisines. L'image soustraite comporte ainsi un ensemble de gouttes entourées d'un bruit résiduel quasiment nul. Le cas échéant, l'opération de soustraction de fond peut être effectuée sur l'image débruitée, sur l'image réalignée, sur l'image super-résolue ou sur l'image lissée.

Selon une forme particulière de réalisation, le procédé de traitement comporte, en outre, préalablement à l'étape de construction d'une image seuillée, une étape de normalisation donnant une image normalisée. L'image normalisée est alors utilisée dans la suite du procédé à la place de l'image initiale ou, le cas échéant, de l'image débruitée, de l'image réalignée, de l'image super-résolue, de l'image lissée ou de l'image soustraite. L'image normalisée est obtenue en divisant l'image initiale par une image de la variance locale. L'image de la variance locale est obtenue en calculant la racine carrée de la convolution par un filtre gaussien du carré de l'image. De manière générale, la dimension du filtre gaussien utilisé pour calculer la variance locale peut représenter environ les deux tiers de la largeur maximale des gouttes.

Comme indiqué, le procédé de traitement selon l'invention peut comporter, préalablement à l'étape de construction d'une image seuillée, une ou plusieurs des étapes de débruitage, de correction de distorsion, d'augmentation de la résolution, de lissage, de soustraction de fond et de normalisation. Lorsque le procédé de traitement comprend plusieurs de ces étapes, les étapes sont avantageusement réalisées dans l'ordre indiqué.

## BRÈVE DESCRIPTION DES DESSINS

D'autres caractéristiques, détails et avantages de l'invention ressortiront à la lecture de la description qui va suivre, donnée uniquement à titre d'exemple et faisant référence aux dessins annexés sur lesquels :

La figure 1 représente un exemple de procédé de traitement d'une image selon l'invention ;
La figure 2A représente un exemple d'image avant traitement ;
La figure 2B représente l'image de la figure 2A après un traitement de débruitage ;
La figure 3A représente le même exemple d'image avant traitement que la figure 2A ;
La figure 3B représente une image super-résolue obtenue par une technique de variation totale appliquée à l'image de la figure 3A ;
La figure 4 représente un exemple de filtre de lissage permettant de réaliser l'étape de lissage et l'étape de débruitage du procédé de traitement selon l'invention ;
La figure 5A représente le résultat d'une opération de lissage de l'image super-résolue de

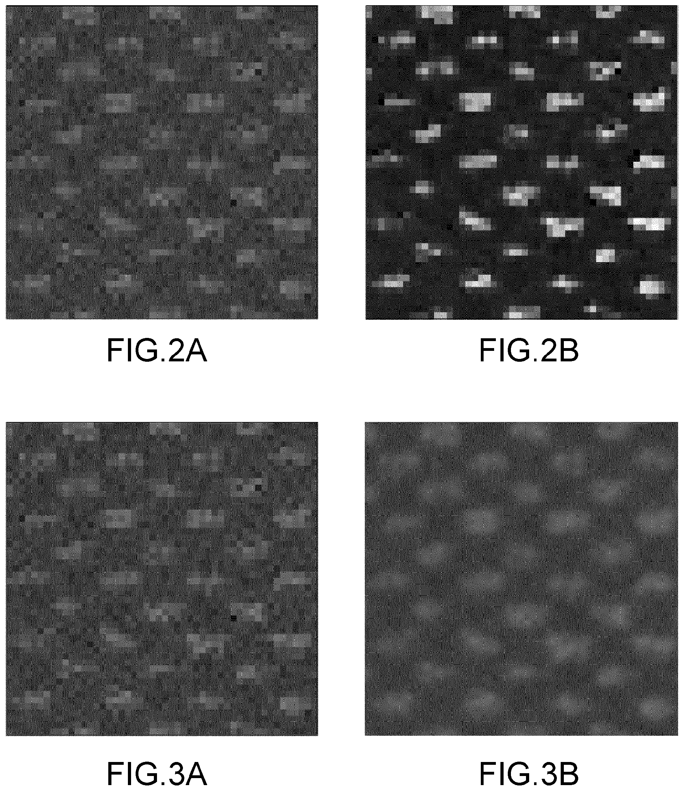

la figure 3B par un filtre de lissage de taille adaptée au diamètre moyen des taches recherchées ;

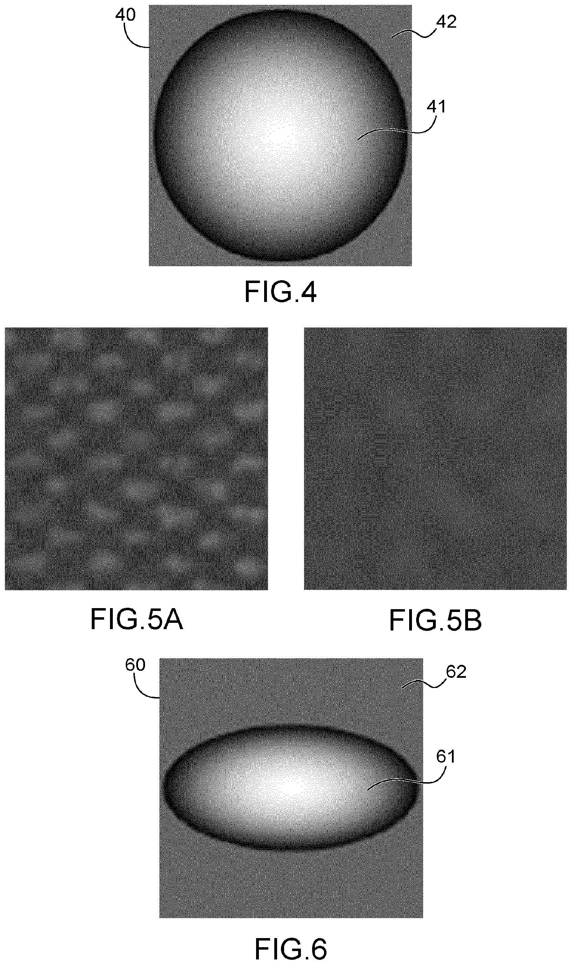

La figure 5B représente le résultat d'une opération de lissage de la même image super-résolue par un filtre de lissage de taille correspondant à la distance maximale entre deux taches voisines ;
La figure 6 représente un exemple de filtre de lissage elliptique permettant de réaliser l'étape de lissage du procédé de traitement selon l'invention en présence de taches présentant sensiblement une forme elliptique par fusion de deux taches partiellement superposées ;

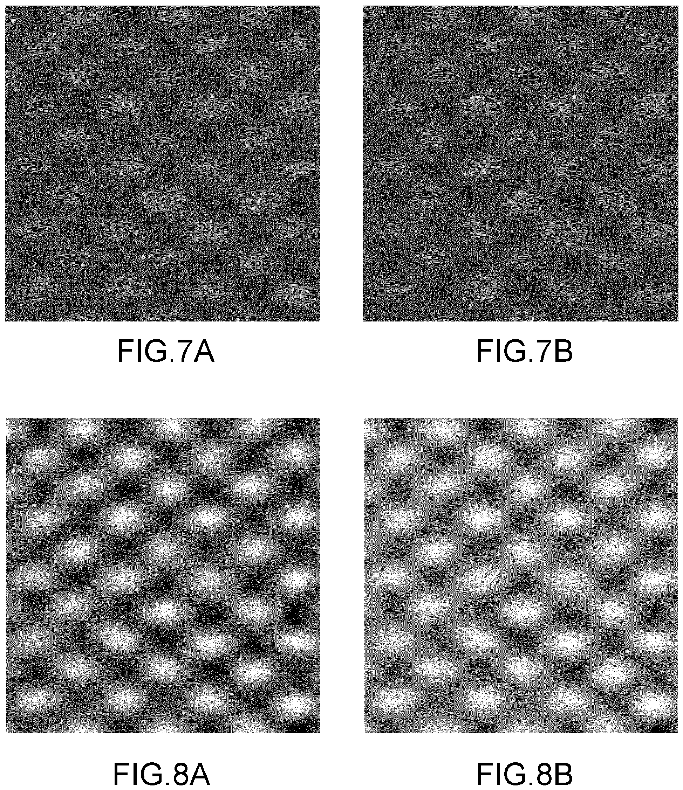

La figure 7A représente une première image lissée obtenue par convolution de l'image super-résolue de la figure 3B avec le filtre de lissage elliptique de la figure 6 ;
La figure 7B représente une deuxième image lissée obtenue par convolution de l'image lissée de la figure 7A avec un filtre de lissage gaussien ;
La figure 8A représente un exemple d'image soustraite, correspondant à l'image lissée de
la figure 7A après soustraction de l'image de la figure 5B ;
La figure 8B représente un exemple d'image normalisée, correspondant à l'image de la figure 8A divisée par une image de la variance locale ;

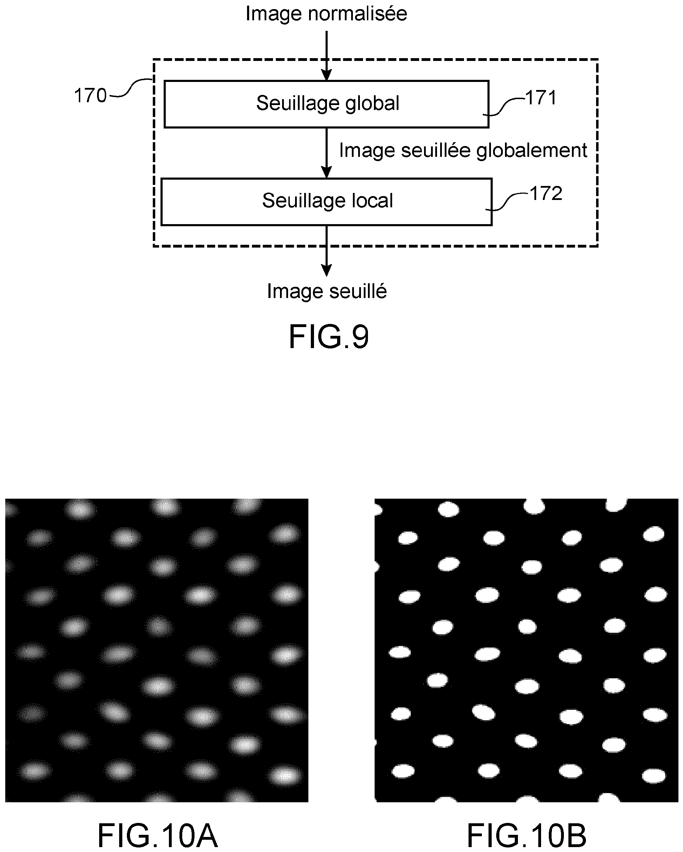

La figure 9 représente un exemple d'étape de construction d'une image seuillée à partir d'une image normalisée ;
La figure 10A représente une image seuillée obtenue par une sous-étape de seuillage global appliquée à l'image normalisée de la figure 8B ;
La figure 10B représente une image seuillée obtenue par une sous-étape de seuillage local appliquée à l'image seuillée de la figure 10A ;

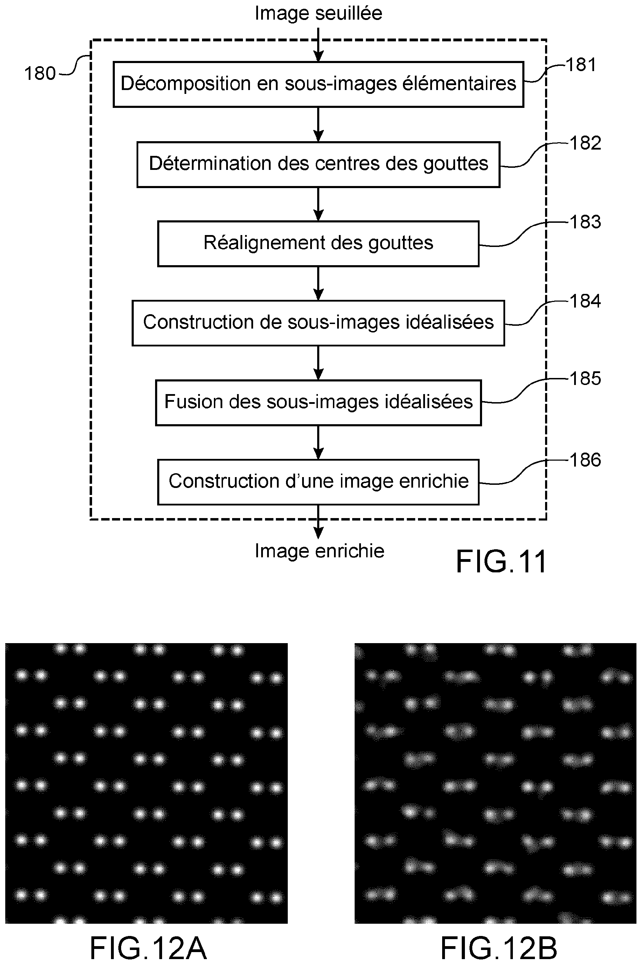

La figure 11 représente un exemple d'étape d'enrichissement d'une image seuillée ;
La figure 12A représente un exemple d'image idéalisée correspondant à l'image seuillée de la figure 10A ;
La figure 12B représente un exemple d'image enrichie obtenue par fusion de l'image idéalisée de la figure 12A avec l'image seuillée de la figure 10A ;

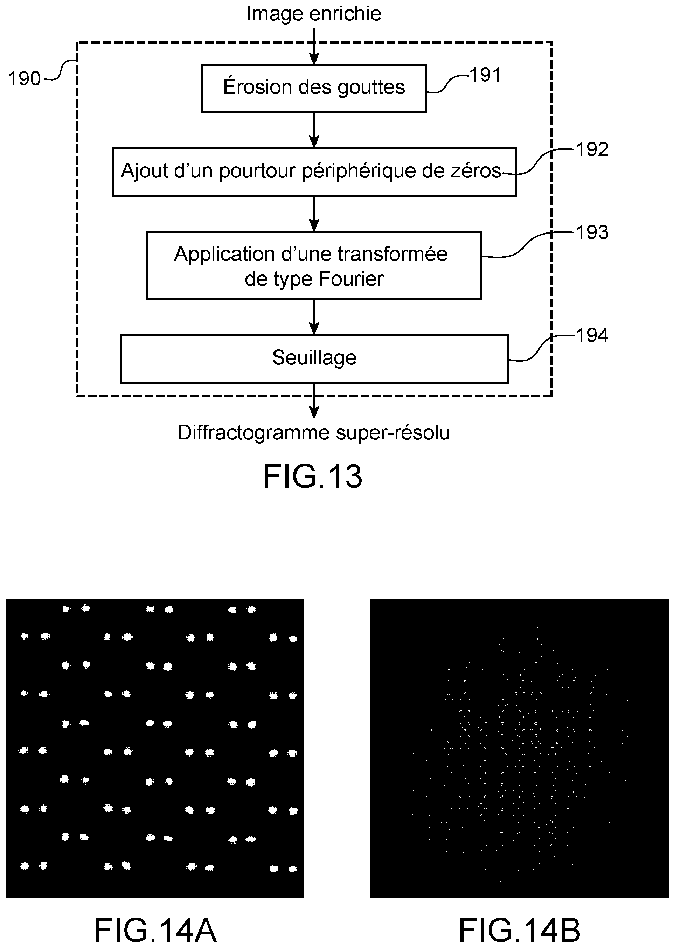

La figure 13 représente un exemple d'étape de construction d'un diffractogramme à partir d'une image enrichie ;
La figure 14A représente un exemple d'image érodée obtenue à l'issue d'une sous-étape d'érosion réalisée sur l'image enrichie de la figure 12B ;
La figure 14B représente un exemple de diffractogramme obtenu à partir de l'image érodée de la figure 14A entourée d'un pourtour de zéros ;

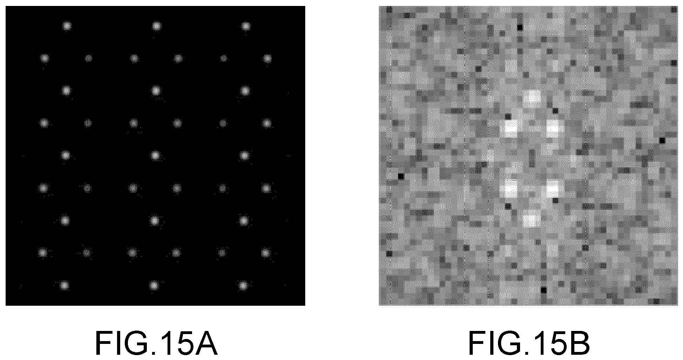

La figure 15A représente un agrandissement de la partie centrale du diffractogramme de la figure 14B ;

La figure 15B représente un exemple de diffractogramme obtenu à l'aide d'un procédé de traitement conventionnel.

## DESCRIPTION DÉTAILLÉE

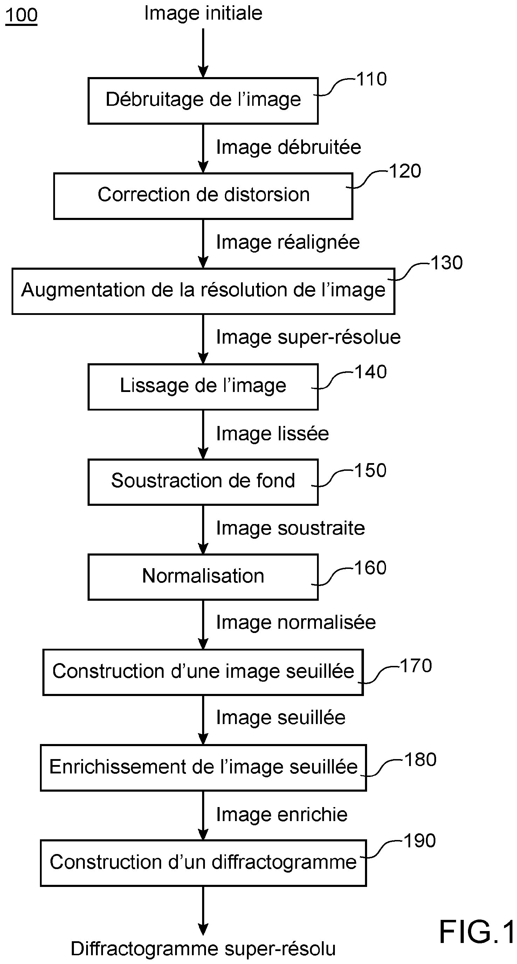

La figure 1 représente un exemple de procédé de traitement d'une image initiale selon l'invention. L'image initiale est par exemple une image de microscopie obtenue par microscopie électronique en transmission, microscopie à force atomique, microscopie à sonde atomique, microscopie optique, microscopie de fluorescence, microscopie par perte d'énergie des rayons X (X-PEEM), microscopie par diffraction électronique, microscopie par diffraction de rayons X, microscopie par diffraction k-PEEM, microscopie par diffraction de neutrons, microscopie à effet tunnel ou microscopie ionique à effet de champ. L'image initiale peut être une image bidimensionnelle (2D) ou multidimensionnelle (nD). Elle est formée d'un ensemble de pixels (2D) ou de points d'un n-hyperpavé (nD) associés chacun à une valeur numérique représentant un niveau de gris. Par souci de concision, la suite de la description prend en exemple le cas d'une image 2D. Néanmoins, les différentes étapes du procédé selon l'invention peuvent être adaptées dans le cas d'une image de dimension $n > 2$. L'image initiale comporte des gouttes qui se détachent du fond continu.

Le procédé de traitement 100 comprend successivement une étape 110 de débruitage de l'image initiale, donnant une image débruitée, une étape 120 de correction de distorsion, donnant une image réalignée, une étape 130 d'augmentation de la résolution de l'image réalignée, donnant une image super-résolue, une étape 140 de lissage de l'image super-résolue, donnant une image lissée, une étape 150 de soustraction de fond, donnant une image normalisée, une étape 160 de normalisation, donnant une image normalisée, une étape 170 de construction d'une image seuillée, donnant une image seuillée, une étape 180 d'enrichissement de l'image seuillée, donnant une image enrichie, et une étape 190 de construction d'un diffractogramme, donnant un diffractogramme super-résolu de l'image enrichie.

L'étape 110 de débruitage peut être réalisée à l'aide de différents traitements de débruitage appliqués sur l'image initiale. En particulier, il est possible d'utiliser la technique de débruitage de type « moyennes non locales », appelée « non-local means » en anglais, décrite dans l'article A. Buades et al : « A review of image denoising algorithms, with a new one », Multiscale Modeling and Simulation, 4 (2005), 490-530. Un autre traitement classique consiste à passer l'image dans le domaine fréquentiel par un transformée de Fourier, afin de lui appliquer un filtre passe-bande, avant d'appliquer une transformée de Fourier inverse. Il est également possible d'utiliser les méthodes de débruitages détaillées dans l'article Goyal, Bhawna et al : « Image Denoising Review: From classical to state-of-the-art approaches », Information Fusion, 55. Plus généralement, le traitement de débruitage peut s'appuyer sur des méthodes dans le réseau réel (spatial domain), des méthodes dans un domaine transformé (transform domain methods), des méthodes dans les domaines statistiques (statistical domain methods), des méthodes hybrides et des méthodes de type intelligence artificielle. Dans un hyperespace de dimension quelconque, le débruitage est de préférence réalisé au moyen d'une convolution par un filtre tel que décrit ci-dessous, appelé « filtre Half-Ball Savitzky-Golay » (HBSG).

Les figures 2A et 2B illustrent un traitement de débruitage appliqué sur un exemple d'image de microscopie. La figure 2A représente l'image de microscopie avant débruitage et la figure 2B représente l'image débruitée obtenue par un traitement de débruitage de type « moyennes non locales » avec un sigma de 10. Sur la figure 2B, les niveaux de gris sont normalisés afin d'améliorer l'aspect visuel.

L'étape 120 de correction de distorsion est réalisée sur l'image débruitée. Le cas échéant, elle peut être réalisée directement sur l'image initiale. Elle vise à corriger les distorsions résiduelles dans l'image liées à de nombreux facteurs tels que les aberrations optiques du microscope, les déformations de l'échantillon sous l'effet de la préparation d'échantillon ou la dérive de l'échantillon durant la mesure. La correction de ces distorsions résiduelles est réalisée en déterminant au préalable la transformation permettant de ramener un échantillon de référence à sa forme théorique. Par exemple, pour retrouver la forme parfaite du silicium, il est possible d'effectuer sur l'image une transformation affine ou de type perspective pour retrouver la forme attendue. La transformation la plus générale, permettant de corriger les aberrations optiques, est une transformation élastique. Toute l'image initiale ou, le cas échéant, l'image débruitée, est déformée en appliquant la transformation déterminée à partir d'une région d'intérêt d'une zone de référence. De préférence, l'image est réalignée de manière à obtenir des alignements théoriques attendus des gouttes dans l'image, ce qui facilite la suite des traitements. Par contre ce réalignement doit être physiquement réaliste, c'est-à-dire qu'il doit corriger les artéfacts de mesure avérés, mais ne doit pas lui-même en générer. Il existe une large palette de corrections de distorsions qu'il convient d'appliquer au cas par cas pour retrouver la forme parfaite de l'échantillon de référence. Cette même distorsion permet de corriger toute l'image, et notamment la zone à analyser obtenue dans les mêmes conditions de mesure que la référence. Il est possible d'effectuer des traitements avancés sur une séquence d'images pour améliorer le résultat, par exemple avec la technique RevSTEM (X. Sang, J. M. LeBeau : « Revolving scanning transmission electron microscopy : correcting sample drift distorsion without prior knowledge », Ultramicroscopy 1338, 28-35 (2014)).

L'étape 130 d'augmentation de la résolution est réalisée sur l'image réalignée. Le cas échéant, elle peut être réalisée directement sur l'image initiale ou sur l'image débruitée. Elle peut notamment être réalisée par interpolation, à l'aide d'une technique de reconstruction de surface, ou une technique de variation totale, appelée « total variation » en anglais. Les méthodes de type variation totale sont notamment détaillées dans les articles L. I. Rudin et al : « Nonlinear total variation based noise removal algorithms », Physica D, 60 (1), 259-268 (1992), T. Chan et al, « High order total variation-based image restoration », SIAM J. Sci. Comput., 22 (2), 503-516 (2000) et G. Chantas et al : « Variational Bayasian image restoration with a product of spatially weighted total variation image priors », IEEE Trans. Image Proc., 19 (2), 351-362, (2010). Ces méthodes présentent l'avantage de bien préserver les contours. L'étape 130 d'augmentation de la résolution est facultative. Elle peut être omise si l'image initiale présente déjà une résolution spatiale suffisante. Quand elle est réalisée, elle permet d'obtenir une image comportant plus de pixels que l'image initiale et qui présente en soi une utilité pour la comparaison avec des modélisations et des simulations atomistiques.

Les figures 3A et 3B illustrent l'impact d'une augmentation de résolution d'un exemple d'image de microscopie. La figure 3A représente la même image de microscopie que l'image 2A, avant l'augmentation de sa résolution, et la figure 3B représente l'image super-résolue obtenue par la technique de variation totale comprenant trois étapes successives de quadruplage du nombre de pixels de 100 itérations chacune. L'image de la figure 3B comporte alors 64 fois plus de pixels que l'image de la figure 3A.

L'étape 140 de lissage est réalisée sur l'image super-résolue. Le cas échéant, elle peut être réalisée directement sur l'image initiale, sur l'image débruitée ou sur l'image réalignée. L'étape 140 de lissage comprend une opération de convolution effectuée entre l'image super-résolue et un filtre de lissage. L'étape 140 de lissage permet de lisser l'image. Elle peut également supprimer une partie du bruit.

Dans un premier mode de réalisation, le filtre de lissage comprend un ensemble de points définissant un hyperpavé dans un espace comprenant le même nombre n de dimensions que l'image initiale. Chaque point du filtre est associé à une valeur numérique. Le filtre comporte un premier sous-ensemble de points formant une n-boule (au sens topologique), et un deuxième sous-ensemble de points comprenant les points n'appartenant pas au premier sous-ensemble. Par définition, une n-boule est une boule de dimension n. Une 2-boule est donc un disque. La valeur des points formant la n-boule est déterminée en fonction de coefficients de la méthode de Savitzky-Golay. Les coefficients successifs sont utilisés pour définir les valeurs des points depuis le centre vers la périphérie de la n-boule. Ces coefficients sont par exemple des coefficients de lissage polynomial de degré 2 ou 3, ou des coefficients de lissage polynomial de degré 4 ou 5. Le choix du degré des coefficients de lissage dépend de l'image à traiter. Plus le degré est élevé, plus le lissage tolère des variations rapides de courbures locales. Le filtre est appelé « filtre Half-Ball Savitzky-Golay », HBSG. La valeur des points du deuxième sous-ensemble est nulle.

En deux dimensions, le filtre noté $[F(i_1, i_2)]$ peut s'écrire sous la forme matricielle suivante, avec $F(i_1, i_2)$ les différentes valeurs du filtre :

| $F(-n, n)$ | | ... | $F(0, n)$ | ... | | $F(n, n)$ |
|---|---|---|---|---|---|---|
| $\vdots$ | | | $\vdots$ | | | $\vdots$ |
| | | | $F(0,1)$ | | | |
| | | ... | $F(0,0)$ | $F(1,0)$ | ... | $F(n, 0)$ |
| | | | $F(0, -1)$ | | | |
| $\vdots$ | | | $\vdots$ | | | $\vdots$ |
| $F(-n, -n)$ | | ... | $F(0, -n)$ | ... | | $F(n, -n)$ |

Pour la suite de la description, on pose par définition :
$s = (d - 1)/2$, où d représente le diamètre impair de la n-boule. L'éloignement radial $r$ du filtre $[F(i_1, i_2)]$ est la norme euclidienne $r = \sqrt{i_1^2 + i_2^2}$, où $i_1$ et $i_2$ définissent respectivement l'indice d'éloignement horizontal et l'indice d'éloignement vertical par rapport au centre du filtre.

Par construction du filtre HBSG, lorsque $r > s$, la valeur numérique $F(i_1, i_2)$ du coefficient est nulle et, lorsque $r \leq s$, $F(i_1, i_2)$ est proportionnelle à $A_s(r)$.

En dimension $n$, le filtre $[F(i_1, i_2, ..., i_n)]$ est un tenseur. L'éloignement radial $r$ est la norme euclidienne $r = (\sqrt{i_1^2 + i_2^2 + \cdots + i_n^2}$, où $i_1, i_2 ... i_n$ définissent les n indices d'éloignement par rapport au centre pour chaque dimension de l'espace. Dans le cas d'un lissage (c'est-à-dire d'une dérivée d'ordre zéro) ou d'une dérivée d'ordre pair, chaque terme $F(i_1, i_2, ..., i_n)$ du n-filtre est alors proportionnel à $A_s(r)$ pour $r \leq s$ et vaut zéro pour $r > s$.

Selon une première variante du premier mode de réalisation, les valeurs $A_s(r)$ sont définies par la formule

suivante :

$$A_s(r) = 3s^2 + 3s - 1 - 5r^2 \qquad (1)$$

avec par définition

s = (d - 1)/2, où d est le nombre impair de pixels le long d'un axe de la n-boule, et

$r = \sqrt{i_1^2 + i_2^2 + \cdots + i_n^2}$ , où $i_1$, $i_2$ ... $i_n$ définissent les n indices d'éloignement par rapport au centre de la n-boule pour chaque dimension de l'espace du filtre, ces indices d'éloignement étant des nombres entiers variant entre -s et s, l'indice 0 correspondant au centre de la 2-boule.

Cette formule provient de la publication de H. H. Madden, « Comments on Savitzky-Golay Convolution Method for Least-Squares Fit Smoothing and Differentiation of Digital Data », Analytical Chemistry, vol. 50, pp. 1383-1386, (1978), et permet de définir le profil de contraste du filtre par rapport à son centre, appelé profil Savitzky-Golay 1D. Cette formule permet d'obtenir un filtre de lissage polynomial de degré 2 ou 3 avec un ordre de dérivation nul (smoothing).
Selon une deuxième variante du premier mode de réalisation, les valeurs $A_s(r)$ sont définies par la formule suivante :

$$A_s(r) = (15s^4 + 30s^3 - 35s^2 - 50s + 12) - 35(2s^2 + 2s - 3)r^2 + 63r^4 \qquad (2)$$

avec les mêmes définitions que précédemment. Cette formule permet d'obtenir un filtre de lissage polynomial de degré 4 ou 5 avec un ordre de dérivation nul.
Pour conserver la dynamique des contrastes, le filtre de lissage est normalisé à la valeur 1. La normalisation consiste à calculer la somme N des valeurs de l'ensemble des pixels du filtre de lissage, et à diviser la valeur de chaque pixel par N. La plage dynamique de l'image convoluée peut évidemment s'ajuster en multipliant tous les termes du filtre par un coefficient de renormalisation arbitraire. Toutes les variantes évidentes (pour l'homme du métier) obtenues à partir d'un filtre de convolution sont évidemment incluses dans cette invention.
La figure 4 représente un exemple de filtre de lissage bidimensionnel 40 de taille 125 x 125 pixels. Le filtre comporte un premier ensemble 41 de pixels formant un disque (une 2-boule) et un deuxième ensemble de pixels 42 entourant le premier ensemble 41 de manière à former un filtre carré (un 2-hyperpavé). La valeur des pixels du premier ensemble 41 est déterminée par la relation (1) ci-dessus. La valeur des pixels de la région 42 est égale à zéro.
Les figures 5A et 5B illustrent l'opération de lissage par un filtre de lissage HBSG. La figure 5A représente le résultat d'un lissage de l'image super-résolue de la figure 3B par un filtre de lissage de taille 31 × 31 pixels construit avec la relation (1) ci-dessus et la figure 5B représente le résultat d'un lissage de l'image super-résolue de la figure 3B par un filtre de lissage de taille 125 x 125 pixels construit avec la même relation (1). La taille de 31 × 31 pixels correspond sensiblement au diamètre moyen de chaque tache recherchée (ici un doublet de spots partiellement fusionnés) alors que la taille de 125 x 125 pixels correspond sensiblement à la plus grande distance entre deux taches voisines. Il peut être observé que plus la taille du filtre est grande, plus l'image est lissée. Pour conserver les détails les plus fins, il est nécessaire d'utiliser le plus petit filtre de lissage possible, au besoin en augmentant en plus le degré polynômial du filtre de lissage. Un compromis doit être trouvé au cas par cas entre la volonté de supprimer le bruit et la nécessité de conserver le maximum d'informations physiquement significatives dans l'image. Une comparaison entre l'image obtenue et la simulation atomistique de l'image permet de déterminer si un contraste est significatif ou s'il constitue du bruit ou un artéfact de mesure qu'il faut supprimer. De manière générale, la taille du filtre peut être choisie de manière à correspondre à la taille des taches recherchées. Il peut en outre être observé sur la figure 5B qu'un filtre dont la taille est au moins égale à la plus grande distance entre deux taches voisines permet d'obtenir une image de fond correspondant à une approximation du fond continu de l'image.
Dans d'autres modes de réalisation, l'étape 140 de lissage peut comprendre une première opération de convolution effectuée entre l'image super-résolue et un filtre de lissage HBSG pour donner une première image lissée, et une deuxième opération de convolution effectuée entre la première image lissée et un filtre de lissage gaussien pour donner une deuxième image lissée. La deuxième image lissée est alors utilisée dans la suite du procédé.
L'étape 110 de débruitage et l'étape 140 de lissage peuvent chacune comprendre, préalablement à l'opération de convolution, une opération de transformation géométrique du filtre de débruitage ou du filtre de lissage, respectivement. De manière générale, la transformation géométrique peut être appliquée au filtre de manière à ce que la n-boule prenne une forme correspondant à la forme moyenne lissée des gouttes à rechercher dans l'image initiale. En particulier, la transformation géométrique peut être appliquée au filtre de manière à ce que la n-boule prenne une forme d'ovoïde.

Dans un espace à deux dimensions, la transformation géométrique peut amener le disque à prendre une forme elliptique. Une telle forme elliptique est appropriée lorsque chaque tache de l'image initiale est constituée de deux spots partiellement superposés et apparaissant sous forme d'une seule tache dans l'image. Tel est notamment le cas pour l'acquisition d'une image de microscopie représentant du silicium avec une résolution insuffisante. Les spots de chaque doublet apparaissent individuellement si la résolution est suffisante mais se retrouvent fusionnés sous la forme d'une seule tache si la résolution est insuffisante. La transformation géométrique consiste par exemple en une homothétie avec des rapports différents selon l'axe horizontal et l'axe vertical.

La figure 6 représente un exemple de filtre de lissage elliptique 60 de taille 93 x 93 pixels. Le filtre de lissage elliptique 60 comporte un premier ensemble de pixels elliptique 61, construit avec la relation (1) ci-dessus et dont le nombre de pixels selon l'axe horizontal est égal à 91 et le nombre de pixels selon l'axe vertical est égal à 45, et un deuxième ensemble de pixels 62 de valeur nulle entourant le premier ensemble de pixels 61 de manière à former un filtre au contour carré. Le filtre de lissage elliptique 60 est par exemple obtenu par une homothétie de rapport ½ selon la direction verticale appliquée sur un filtre de lissage circulaire, dont le premier ensemble de pixels présente une taille de $91 \times 91$ pixels. Les pixels manquants après homothétie sont mis à la valeur nulle.

La figure 7A représente une première image lissée obtenue par convolution de l'image super-résolue de la figure 3B avec le filtre de lissage elliptique 60 représenté sur la figure 6. Par rapport au lissage effectué à l'aide du filtre 40 de la figure 4, le lissage par le filtre elliptique 60 génère des taches plus régulières. La figure 7B représente une deuxième image lissée obtenue par convolution de la première image lissée de la figure 7A avec un filtre de lissage gaussien. Le lissage par un filtre gaussien permet d'atténuer encore les fluctuations locales de contraste mais tend à estomper les contours et peut engendrer des déplacements des taches.

L'étape 150 de soustraction de fond est réalisée sur l'image lissée. Le cas échéant, elle peut être réalisée directement sur l'image initiale, sur l'image débruitée, sur l'image réalignée ou sur l'image super-résolue. Cette étape 150 comprend par exemple une sous-étape de soustraction du fond continu. Cette sous-étape est par exemple réalisée en soustrayant de l'image lissée finement l'image de fond obtenue à l'aide d'un filtre de lissage de relativement grande dimension qui fait disparaître les taches dans un fond diffus, c'est-à-dire typiquement en utilisant un filtre HBSG de taille sensiblement égale à la distance maximale entre deux taches voisines. L'image ainsi obtenue est appelée « image soustraite ». L'étape 150 peut en outre comprendre une deuxième sous-étape dans laquelle l'image soustraite est divisée par une image de la variance locale pour donner une image normalisée. L'image de la variance locale est obtenue en calculant la racine carrée de la convolution par un filtre gaussien du carré de l'image. De manière générale, la dimension du filtre gaussien utilisé pour calculer la variance locale peut représenter environ les deux tiers de la largeur maximale des motifs. Ainsi, pour un motif de taille $31 \times 31$ pixels, la dimension du filtre gaussien peut être égale à 20 pixels.

Les figures 8A et 8B illustrent l'étape 150 de soustraction de fond. La figure 8A représente l'image soustraite correspondant à l'image lissée de la figure 7A après soustraction de l'image de la figure 5B. La figure 8B représente l'image normalisée, c'est-à-dire l'image soustraite de la figure 8A divisée par l'image de la variance locale avec un filtre gaussien dont la dimension est égale à 20 pixels.

La normalisation permet de conserver l'ensemble des pics de l'image malgré l'étape 170 de seuillage. En effet, si l'image n'est pas normalisée, alors un grand nombre de taches est susceptible d'être perdu à l'issue de l'étape de seuillage.

La figure 9 représente un exemple d'étape 170 de construction d'une image seuillée. Ladite étape 170 est réalisée sur l'image normalisée. Le cas échéant, elle peut être réalisée directement sur l'image initiale, sur l'image débruitée, sur l'image réalignée, sur l'image super-résolue ou sur l'image lissée. Elle comprend une première sous-étape 171 de seuillage global de l'image normalisée, donnant une image seuillée globalement, et une deuxième sous-étape 172 de seuillage local de l'image seuillée globalement, donnant l'image seuillée. La première sous-étape 171 consiste à construire une image seuillée dans laquelle la valeur de chaque point est égale à zéro si la valeur du point correspondant dans l'image normalisée est inférieure à un seuil global prédéterminé, et égale à la valeur du point correspondant dans l'image normalisée sinon. La deuxième sous-étape 172 est par exemple réalisée à partir de la technique de seuillage décrite dans l'article J. Bernsen : « Dynamic Thresholding of Grey-Level Images », Proc. Of the 8th Int. Conf. On Pattern Recognition, 1986. Cette technique consiste à déterminer un seuil local pour chaque point de l'image seuillée globalement en fonction des valeurs des points dans une fenêtre entourant le point considéré. La valeur de chaque point de l'image seuillée est alors égale à zéro si la valeur du point correspondant dans l'image seuillée est inférieure au seuil local correspondant, et égale à un sinon dans le cas d'une binarisation. Le seuil local est par exemple calculé pour être égal à la moitié de la somme de la plus grande valeur des points de la fenêtre considérée et de la plus faible valeur des points de ladite fenêtre. La forme et les dimensions de la fenêtre utilisée pour la sous-étape 172 sont déterminées en fonction de la forme et des dimensions des taches dans l'image de microscopie. En particulier, chaque dimension de la fenêtre peut être égale à la dimension correspondante d'une tache dans l'image initiale.

Il est à noter que, dans un autre mode de réalisation, l'étape 170 de construction d'une image seuillée peut ne comprendre que la sous-étape 171 de seuillage global ou que la sous-étape 172 de seuillage local. Dans ce cas, ladite sous-étape 172 est réalisée directement sur l'image normalisée.

Les figures 10A et 10B illustrent la construction d'une image seuillée à partir de l'image normalisée de la figure 8B. La figure 10A représente une image seuillée globalement obtenue par la sous-étape 171 de seuillage global appliquée à l'image normalisée de la figure 8B et la figure 10B représente l'image seuillée obtenue par la sous-étape 172 de seuillage local appliquée à l'image seuillée globalement de la figure 10A. Dans l'image seuillée de la figure 10B, les taches sont clairement délimitées par un fond noir, correspondant à la valeur zéro. Le bruit de l'image est donc remplacé par des pixels de valeur nulle à l'issue de ce processus. Le processus de seuillage a donc pour résultat que chaque tâche est entourée par un fond noir constitué de pixels de valeur nulle.

La figure 11 représente un exemple d'étape 180 d'enrichissement de l'image seuillée. Ladite étape 180 est réalisée sur l'image seuillée. Le cas échéant, elle peut être réalisée directement sur l'image initiale, sur l'image débruitée, sur l'image réalignée, sur l'image super-résolue, sur l'image lissée ou sur l'image normalisée. L'étape 180 d'enrichissement consiste à intégrer à l'image initiale des informations préalablement connues concernant la physique de l'échantillon imagé. Ces informations peuvent être obtenues en moyennant des gouttes de référence contenues dans l'image normalisée ou obtenues par moyennage temporel de gouttes de référence. Le moyennage temporel est obtenu par acquisition en fonction du temps d'une série d'images suivie d'un réalignement des données pour obtenir une image 3D. La moyenne des images selon l'axe temporel permet d'obtenir une image 2D de référence. Dans l'exemple de la figure 11, cette étape 180 comprend une sous-étape 181 de décomposition de l'image seuillée en une ou plusieurs sous-images élémentaires, une sous-étape 182 de détermination des centres des gouttes de l'image seuillée, une sous-étape 183 de réalignement des gouttes, une sous-étape 184 de construction de sous-images idéalisées, une sous-étape 185 de fusion des sous-images idéalisées et une sous-étape 186 de construction de l'image enrichie.

Au cours de la sous-étape 181, l'image seuillée est décomposée en une ou plusieurs sous-images élémentaires. Les sous-images élémentaires présentent chacune les mêmes dimensions que l'image seuillée. Chaque sous-image élémentaire comprend l'ensemble des gouttes de l'image seuillée correspondant à une classe de gouttes définie par un critère de tri prédéterminé. Le critère de tri peut comprendre au moins un critère relatif à un paramètre morphologique des gouttes recherchées, à leur surface, à la valeur numérique moyenne de leurs points ou à l'écart-type des valeurs de ces points. Le paramètre morphologique peut notamment concerner l'ellipticité, l'orientation, le périmètre ou le diamètre de Féret des gouttes. En particulier, chaque classe de gouttes peut être définie par un diamètre minimal et un diamètre maximal. Dans chaque sous-image élémentaire, la valeur numérique de chaque point prend la valeur du point correspondant dans l'image seuillée si ce point appartient à une goutte de la classe considérée, et la valeur nulle sinon. Ainsi, l'addition des différentes sous-images élémentaires correspond à l'image seuillée.

La sous-étape 182 consiste à déterminer les coordonnées du centre de chaque goutte dans les sous-images élémentaires. Le centre de chaque goutte correspond par exemple à son barycentre ou son centroïde.

Au cours de la sous-étape 183, chaque sous-image élémentaire subit une transformation géométrique de sorte que les centres des gouttes soient alignés selon au moins un ensemble d'axes parallèles entre eux. Les centres des gouttes sont par exemple alignés selon un premier ensemble d'axes et un deuxième ensemble d'axes, déterminé par exemple en fonction des caractéristiques théoriques des gouttes, telles que les paramètres cristallographiques des matériaux considérés. De préférence, la transformation géométrique est déterminée de sorte que les centres des gouttes soient alignés à la fois selon un premier ensemble d'axes parallèles entre eux et selon un deuxième ensemble d'axes parallèles entre eux. Après transformation, les sous-images élémentaires sont appelées « sous-images réalignées ». Ce réalignement n'est possible que s'il existe des connaissances sur la position théoriques des gouttes.

La sous-étape 184 de construction de sous-images idéalisées consiste à construire une sous-image idéalisée pour chaque sous-image réalignée. Chaque sous-image idéalisée comprend une goutte idéalisée de la classe de gouttes considérée générée au niveau du centre de chaque goutte. Chaque goutte idéalisée intègre des informations relatives à la physique de l'échantillon imagé, par exemple le numéro atomique moyen de la colonne atomique imagée. Les gouttes idéalisées peuvent être obtenues par simulation d'une image parfaite ou à partir d'une ou plusieurs gouttes expérimentales de référence moyennées dans le temps pour augmenter au maximum le ratio signal/bruit.

La sous-étape 185 de fusion des sous-images idéalisées consiste à fusionner les sous-images idéalisées pour reformer une seule image, appelée « image idéalisée ». En pratique, la valeur de chaque point de l'image idéalisée est déterminée comme étant la somme des valeurs des points correspondants dans les sous-images idéalisées.

La sous-étape de construction d'une image enrichie consiste à construire l'image enrichie en fusionnant l'image seuillée et l'image idéalisée. Dans un exemple de réalisation, correspondant à une opération de morphing, la valeur de chaque point de l'image enrichie peut être déterminée comme étant le résultat d'une combinaison linéaire des valeurs des points correspondants dans l'image seuillée et dans l'image idéalisée. Dans un autre exemple de réalisation, des techniques de transfert de style développées au moyen de l'intelligence artificielle peuvent être utilisées. L'image enrichie intègre alors à la fois les informations de l'image initiale, le cas échéant traitée au cours d'une ou plusieurs des étapes 110, 120, 130, 140, 150, 160, 170, et les informations des différents types de gouttes idéalisées.

Les figures 12A et 12B illustrent la construction d'une image enrichie à partir de l'image seuillée de la figure 10A. La figure 12A représente une image idéalisée dans laquelle chaque tache théorique comprend un doublet de spots centré sur le centre de l'une des taches de l'image seuillée. La figure 12B représente une image enrichie obtenue par fusion de l'image idéalisée de la figure 12A avec l'image seuillée de la figure 10A.

La figure 13 représente un exemple d'étape 190 de construction d'un diffractogramme super-résolu. Cette étape 190 est de préférence réalisée à partir de l'image enrichie. Le cas échéant, elle peut être réalisée à partir de l'image initiale, de l'image débruitée, de l'image réalignée, de l'image super-résolue, de l'image lissée, de l'image normalisée ou de l'image seuillée. Dans l'exemple de la figure 13, elle comprend une sous-étape 191 d'érosion des gouttes, une sous-étape 192 d'ajout d'un pourtour périphérique de zéros, une sous-étape 193 d'application d'une transformée de type Fourier et une sous-étape 194 de seuillage. Les sous-étapes 191 d'érosion des gouttes et 194 de seuillage sont optionnelles.

La sous-étape 191 d'érosion des gouttes consiste à réduire la dimension de chaque goutte dans l'image enrichie. Chaque goutte peut être réduite selon un rapport prédéterminé ou de manière à être formée d'un nombre prédéterminé de points. Après la sous-étape d'érosion, l'image enrichie est appelée « image érodée ». À l'extrême, chaque goutte de l'image enrichie peut être réduite à un unique point dans l'image érodée.

La sous-étape 192 d'ajout d'un pourtour périphérique consiste à ajouter à l'image érodée un ensemble de points de valeur nulle à la périphérie de l'image enrichie, dans chacune des n dimensions de l'image. L'image érodée est alors appelée « image augmentée ». Le pourtour périphérique peut notamment comporter un unique point dans chaque dimension de l'image. L'ajout du pourtour périphérique a pour effet d'augmenter le nombre de points de l'image érodée, et donc d'augmenter la résolution spatiale du diffractogramme. Il est à noter qu'en l'absence de sous-étape 191 d'érosion, la sous-étape 192 est appliquée directement sur l'image enrichie.

La sous-étape 193 d'application d'une transformée de type Fourier vise à passer l'image augmentée du domaine spatial au domaine fréquentiel. Elle consiste à appliquer une transformée de type Fourier à l'image augmentée. L'expression « transformée de type Fourier » désigne la transformée de Fourier et toutes ses variantes et généralisations aux hyperespaces, notamment la transformée de Hartley, la transformée de Hartley discrète (DHT), la transformée de Fourier rapide, la transformée de Fourier discrète, la transformée de Fourier discrète généralisée, la transformée de Fourier à court terme ou « short-time Fourier transform » ou « short-term Fourier transform » (STFT) en anglais, la transformée de Fourier fractionnaire ou « Fractional Fourier transform » (FRFT) en anglais, la transformée de Chirplet, la transformée de Hankel, la transformée de Fourier-Bros-Lagolnitzer, la transformée linéaire canonique, les transformées de type discrete-time Fourier transform (DTFT), la transformée de Fourier à espace discret ou « discrete-space Fourier transform » (DSFT) en anglais, la transformée en Z, la transformée en cosinus discrète modifiée ou « modified discrète cosine transform » (MDCT) en anglais, et la transformée de Fourier de groupes finis.

Au cours de la sous-étape 194 de seuillage, les valeurs des points du diffractogramme inférieures à un seuil prédéterminé sont mises à zéro afin de ne conserver que les taches de diffraction les plus brillantes qui se détachent sur fond noir, afin de permettre une comparaison directe et rapide avec les simulations de clichés de diffractions.

Le diffractogramme peut être qualifié de diffractogramme hyper-résolu spatialement du fait de l'étape 180 d'enrichissement de l'image seuillée et/ou de la sous-étape 192 d'ajout d'un pourtour périphérique augmentant le nombre de points.

Les figures 14A et 14B illustrent la construction d'un diffractogramme à partir de l'image enrichie de la figure 12B. La figure 14A représente un exemple d'image érodée obtenue à l'issue de la sous-étape 191 d'érosion des gouttes appliquée à l'image enrichie de la figure 12B. La figure 14B représente un exemple de diffractogramme obtenu à l'issue de la sous-étape 192 d'ajout d'un pourtour périphérique à l'image érodée de la figure 14A et de la sous-étape 193 d'application d'une transformée de Fourier à cette image suivi d'une sous-étape 194 de seuillage permettant d'obtenir un ensemble de gouttes sur fond noir.

Les figures 15A et 15B illustrent les performances du procédé de traitement selon l'invention en comparaison d'un traitement conventionnel. La figure 15A représente un agrandissement de la partie centrale du diffractogramme de la figure 14B et la figure 15B représente un exemple de diffractogramme obtenu à l'aide d'un procédé de traitement conventionnel de l'image brute par transformée de Fourier rapide. Le diffractogramme obtenu par le procédé de traitement selon l'invention (visible sur la figure 14B) comprend environ 770 pics de diffraction très fins et très proches de la position théorique, alors que le diffractogramme obtenu par le procédé de traitement conventionnel ne comporte que 6 pics relativement grossiers. Le gain en résolution, en termes de pics de diffraction, obtenu par le procédé selon l'invention est donc supérieur à 100.

De manière générale, le procédé de traitement selon l'invention permet de construire un diffractogramme physiquement juste et proche de la perfection, à partir d'une image initiale imparfaite. Le procédé est universel et adaptatif. Il fonctionne pour tout type d'image de résolution atomique. Le choix de la taille du filtre de lissage détermine la taille de l'information (sous forme de goutte) recherchée. Par ailleurs, un diffractogramme peut être construit à partir d'une image de microscopie contenant peu de taches, typiquement au moins cinq taches. Le processus de seuillage et de tri permet notamment une sélectivité chimique, car le tri par valeur de contraste des taches permet de sélectionner uniquement les atomes susceptibles d'engendrer ce type de taches. Le seuillage permet aussi une sélectivité structurale, car le tri par taille de taches permet de conserver uniquement certains types de défauts par exemple. Par ailleurs, l'étape de formation des sous-images élémentaires permet d'obtenir la sélectivité du traitement de super-résolution des images et des diffractogrammes, en effectuant des tris morphologiques sur chacune des taches afin de conserver sélectivement l'information pertinente et éliminer les artéfacts et points aberrants des images.

**Revendications**

1. Procédé de traitement d'une image initiale formée d'un ensemble de points définissant un n-hyperpavé dans un espace à *n* dimensions, *n* étant un entier supérieur ou égal à deux, chaque point étant associé à une valeur numérique, l'image initiale étant une image de microscopie comprenant un ensemble de gouttes se détachant du bruit, le procédé (100) comprenant :

   - une étape (170) de construction d'une image seuillée, dans laquelle la valeur de chaque point de l'image seuillée prend la valeur nulle si la valeur du point correspondant dans l'image initiale est inférieure à un seuil prédéterminé, et prend la valeur du point correspondant dans l'image initiale sinon, et
   - une étape (180) d'enrichissement de l'image seuillée donnant une image enrichie, ladite étape comprenant :

      ◦ une sous-étape (181) de décomposition de l'image seuillée en une ou plusieurs sous-images élémentaires, chaque sous-image élémentaire comprenant l'ensemble des gouttes de l'image seuillée correspondant à une classe de gouttes définie par un critère de tri prédéterminé,
      ◦ une sous-étape (182) de détermination des centres des gouttes, dans laquelle, dans chacune des sous-images élémentaires, le centre de chaque goutte est déterminé,
      une sous-étape (184) de construction de sous-images dites « idéalisées », dans laquelle une sous-image idéalisée est construite pour chaque sous-image élémentaire, chaque sous-image idéalisée comprenant une goutte idéalisée de la classe de gouttes considérée générée au niveau du centre de chaque goutte de la sous-image élémentaire correspondante, chaque goutte idéalisée intégrant des informations relatives à la physique d'un échantillon imagé, les gouttes idéalisées étant obtenues par simulation d'une image parfaite ou à partir d'une ou plusieurs gouttes expérimentales de référence moyennées,
      ◦ une sous-étape (185) de fusion des sous-images idéalisées, dans laquelle les différentes sous-images idéalisées sont fusionnées pour former une image idéalisée, et
      ◦ une sous-étape (186) de construction de l'image enrichie, dans laquelle l'image idéalisée est fusionnée avec l'image seuillée pour former l'image enrichie.

2. Procédé selon la revendication 1, dans lequel le critère de tri comprend au moins un critère relatif à un paramètre morphologique des gouttes, à leur surface, à leur valeur numérique moyenne ou à leur écart-type.

3. Procédé selon l'une des revendications 1 et 2, dans lequel l'étape (180) d'enrichissement de l'image seuillée comprend, en outre, entre la sous-étape (182) de détermination des centres des gouttes et la sous-étape (184) de construction des sous-images idéalisées, une sous-étape (183) de réalignement des centres des gouttes donnant des sous-images réalignées, dans laquelle chaque sous-image réalignée est obtenue par une transformation géométrique de la sous-image élémentaire correspondante, de sorte que les centres des gouttes soient alignés selon au moins un ensemble d'axes parallèles entre eux dans chaque sous-image réalignée, les sous-images réalignées étant utilisées dans la suite du procédé à la place des sous-images élémentaires.

4. Procédé selon l'une des revendications précédentes comprenant, en outre, une étape (190) de construction d'un diffractogramme, ladite étape de construction d'un diffractogramme comprenant :

   - une sous-étape (192) d'ajout d'un pourtour périphérique, dans laquelle un pourtour périphérique formé d'un ensemble de points dans un espace à *n* dimensions est ajouté à la périphérie de l'image enrichie pour donner une image augmentée, chaque point du pourtour périphérique étant associé à la valeur nulle, et
   - une sous-étape (193) d'application d'une transformée de type Fourier à l'image augmentée pour former le diffractogramme.

5. Procédé selon la revendication 4, dans lequel l'étape (190) de construction d'un diffractogramme comprend, en outre, postérieurement à la sous-étape (193) d'application d'une transformée de type Fourier, une sous-étape (194) de seuillage donnant un diffractogramme seuillé, dans laquelle la valeur de chaque point du diffractogramme seuillé prend la valeur nulle si la valeur du point correspondant dans le diffractogramme est inférieure à un seuil prédéterminé.

6. Procédé selon l'une des revendications 4 et 5, dans lequel l'étape (190) de construction d'un diffractogramme comprend, en outre, préalablement à la sous-étape (193) d'application d'une transformée de type Fourier, une sous-étape (191) d'érosion, dans laquelle une dimension de chaque goutte dans l'image enrichie est réduite.

7. Procédé selon l'une des revendications précédentes comprenant, en outre, préalablement à l'étape (170) de construction d'une image seuillée, une étape (110) de débruitage de l'image initiale donnant une image débruitée, dans laquelle un traitement de débruitage est appliqué sur l'image initiale, l'image débruitée étant utilisée dans la suite du procédé à la place de l'image initiale.

8. Procédé selon la revendication 7, dans laquelle l'étape (110) de débruitage comprend une opération de convolution effectuée entre l'image initiale et un filtre de débruitage, le filtre de débruitage étant formé d'un ensemble de points définissant un n-hyperpavé dans un espace à $n$ dimensions, $n$ étant un entier supérieur ou égal à deux, chaque point du filtre étant associé à une valeur numérique, le filtre comportant un premier sous-ensemble de points formant une n-boule et un deuxième sous-ensemble de points comprenant les points n'appartenant pas au premier sous-ensemble, la valeur des points du premier sous-ensemble étant déterminée, depuis le centre vers la périphérie de la n-boule, en fonction de coefficients calculés par une méthode d'approximation polynomiale de type Savitzky-Golay, la valeur des points du deuxième sous-ensemble étant nulle.

9. Procédé selon l'une des revendications précédentes comprenant, en outre, préalablement à l'étape (170) de construction d'une image seuillée, une étape (130) d'augmentation de la résolution de l'image initiale, donnant une image super-résolue, dans laquelle l'image super-résolue est générée en augmentant la résolution spatiale de l'image initiale, l'image super-résolue étant utilisée dans la suite du procédé à la place de l'image initiale.

10. Procédé selon l'une des revendications précédentes comprenant, en outre, préalablement à l'étape de construction d'une image seuillée, une étape (140) de lissage de l'image initiale, donnant une image lissée, l'image lissée étant utilisée dans la suite du procédé à la place de l'image initiale.

11. Procédé selon la revendication 10, dans laquelle l'étape (140) de lissage comporte une opération de convolution effectuée entre l'image initiale et un filtre de lissage (40, 60), le filtre de lissage étant formé d'un ensemble de points définissant un n-hyperpavé dans un espace à $n$ dimensions, $n$ étant un entier supérieur ou égal à deux, chaque point du filtre étant associé à une valeur numérique, le filtre comportant un premier sous-ensemble de points formant une n-boule et un deuxième sous-ensemble de points comprenant les points n'appartenant pas au premier sous-ensemble, la valeur des points du premier sous-ensemble étant déterminée, depuis le centre vers la périphérie de la n-boule, en fonction de coefficients calculés par une méthode d'approximation polynomiale de type Savitzky-Golay, la valeur des points du deuxième sous-ensemble étant nulle.

12. Procédé selon l'une des revendications 8 et 11,

dans lequel la valeur $F(i_1, i_2, ... , i_n)$ des points du filtre vaut zéro si $r > s$ et, si $r \leq s$, est proportionnelle à :

$$A_s(r) = 3s^2 + 3s - 1 - 5r^2$$

avec par définition
$s = (d - 1)/2$, où $d$ représente le diamètre impair de la n-boule, et
$$r = \sqrt{i_1{}^2 + i_2{}^2 + \cdots + i_n{}^2}$$, où $i_1$, $i_2$ ... $i_n$ définissent les $n$ indices d'éloignement par rapport au centre de la n-boule pour chaque dimension de l'espace du filtre, ces indices d'éloignement étant des nombres entiers variant entre $-s$ et $s$,
ou
dans lequel la valeur $F(i_1, i_2, ..., i_n)$ des points du filtre vaut zéro si $r > s$ et, si $r \leq s$, est proportionnelle à :

$$A_s(r) = (15s^4 + 30s^3 - 35s^2 - 50s + 12) - 35(2s^2 + 2s - 3)r^2 + 63r^4$$

avec par définition
$s = (d - 1)/2$, où $d$ représente le diamètre impair de la n-boule, et

$$r = \sqrt{i_1{}^2 + i_2{}^2 + \cdots + i_n{}^2}$$ , où $i_1$, $i_2$ ... $i_n$ définissent les $n$ indices d'éloignement par rapport au centre de la n-boule pour chaque dimension de l'espace du filtre, ces indices d'éloignement étant des nombres entiers variant entre -$s$ et $s$.

13. Procédé selon l'une des revendications 8 et 11 à 12, dans lequel l'étape (110) de débruitage et/ou l'étape (140) de lissage comprennent chacune, préalablement à l'opération de convolution, une opération de transformation géométrique du filtre, dans laquelle les points du premier sous-ensemble subissent une transformation géométrique.

14. Procédé selon l'une des revendications précédentes comprenant, en outre, préalablement à l'étape (170) de construction d'une image seuillée, une étape (150) de soustraction de fond continu donnant une image soustraite, la valeur de chaque point de l'image soustraite étant égale à la valeur du point correspondant dans l'image initiale soustraite de la valeur du point correspondant dans une image de fond continu.

**Patentansprüche**

1. Verfahren zur Verarbeitung eines ursprünglichen Bildes, das aus einer Reihe von Punkten gebildet wird, die einen n-Hyperblock in einem Raum mit $n$ Dimensionen definieren, wobei $n$ eine ganze Zahl größer oder gleich zwei ist, wobei jeder Punkt einem numerischen Wert zugeordnet ist, wobei das ursprüngliche Bild ein Mikroskopie-Bild ist, das eine Reihe von Tropfen umfasst, die sich vom Rauschen abheben, wobei das Verfahren (100) umfasst:

   - einen Schritt (170) zum Aufbauen eines Schwellenbildes, wobei der Wert eines jeden Punktes des Schwellenbildes den Wert null annimmt, wenn der Wert des entsprechenden Punktes im ursprünglichen Bild kleiner als eine vorbestimmte Schwelle ist, und ansonsten den Wert des entsprechenden Punktes im ursprünglichen Bild annimmt, und
   - einen Schritt (180) zum Bereichern des Schwellenbildes, wodurch sich ein bereichertes Bild ergibt, wobei der Schritt umfasst:

      ◦ einen Teilschritt (181) zum Aufgliedern des Schwellenbildes in ein oder mehrere elementare Teilbilder, wobei jedes elementare Teilbild die Reihe der Tropfen des entsprechenden Schwellenbildes mit einer Tropfenklasse umfasst, die durch ein vorbestimmtes Sortierkriterium definiert wird,
      ◦ einen Teilschritt (182) zum Bestimmen der Zentren der Tropfen, bei dem in jedem der elementaren Teilbilder das Zentrum eines jeden Tropfens bestimmt wird,

      einen Teilschritt (184) zum Aufbauen von sogenannten "idealisierten" Teilbildern, bei dem ein idealisiertes Teilbild für jedes elementare Teilbild aufgebaut wird, wobei jedes idealisierte Teilbild einen idealisierten Tropfen der betrachteten Tropfenklasse umfasst, die im Bereich des Zentrums eines jeden Tropfens des entsprechenden elementaren Teilbilds erzeugt wird, wobei jeder idealisierte Tropfen Informationen in Bezug auf die Physik einer abgebildeten Probe integriert, wobei die idealisierten Tropfen durch Simulieren eines perfekten Bildes oder aus einem oder mehreren gemittelten experimentellen Bezugsbildern erhalten werden,

      ◦ einen Teilschritt (185) zur Fusion der idealisierten Teilbilder, wobei die verschiedenen idealisierten Teilbilder fusioniert werden, um ein idealisiertes Bild zu bilden, und
      ◦ einen Teilschritt (186) zum Aufbauen des bereicherten Bildes, wobei das idealisierte Bild mit dem Schwellenbild fusioniert wird, um das bereicherte Bild zu bilden.

2. Verfahren nach Anspruch 1, wobei das Sortierkriterium mindestens ein Kriterium in Bezug auf einen morphologischen Parameter der Tropfen, auf deren Oberfläche, auf deren numerischen Mittelwert oder auf deren Standardabweichung umfasst.

3. Verfahren nach einem der Ansprüche 1 und 2, wobei der Schritt (180) des Bereicherns des Schwellenbildes weiter zwischen dem Teilschritt (182) des Bestimmens der Zentren der Tropfen und dem Teilschritt (184) des Aufbauens der idealisierten Teilbilder einen Teilschritt (183) zur Neuausrichtung der Zentren der Tropfen umfasst, wodurch sich neu ausgerichtete Teilbilder ergeben, wobei jedes neu ausgerichtete Teilbild durch eine geometrische Transformation des entsprechenden elementaren Teilbilds erhalten wird, sodass die Zentren der Tropfen entlang mindestens einer Reihe von zueinander parallelen Achsen in jedem neu ausgerichteten Teilbild ausgerichtet sind, wobei die neu ausgerichteten Teilbilder in der Folge des Verfahrens anstelle der elementaren Teilbilder verwendet werden.

4.  Verfahren nach einem der vorstehenden Ansprüche, das weiter einen Schritt (190) zum Aufbauen eines Diffraktogramms umfasst, wobei der Schritt zum Aufbauen eines Diffraktogramms umfasst:

    - einen Teilschritt (192) zum Hinzufügen einer Umfangskante, wobei eine Umfangskante, die aus einer Reihe von Punkten in einem Raum mit n Dimensionen gebildet wird, zum Umfang des bereicherten Bildes hinzugefügt wird, um ein vergrößertes Bild zu ergeben, wobei jeder Punkt der Umfangskante dem Wert null zugeordnet wird, und
    - einen Teilschritt (193) zum Anwenden einer Fourier-Transformation auf das vergrößerte Bild, um das Diffraktogramm zu bilden.

5.  Verfahren nach Anspruch 4, wobei der Schritt (190) zum Aufbauen eines Diffraktogramms weiter nach dem Teilschritt (193) zum Anwenden einer Fourier-Transformation einen Schwellen-Teilschritt (194) umfasst, wodurch sich ein Schwellen-Diffraktogramm ergibt, wobei der Wert eines jeden Punktes des Schwellen-Diffraktogramms den Wert null annimmt, wenn der Wert des entsprechenden Punktes in dem Diffraktogramm kleiner als eine vorbestimmte Schwelle ist.

6.  Verfahren nach einem der Ansprüche 4 und 5, wobei der Schritt (190) zum Aufbauen eines Diffraktogramms weiter vor dem Teilschritt (193) zum Anwenden einer Fourier-Transformation einen Erosions-Teilschritt (191) umfasst, wobei eine Dimension eines jeden Tropfens in dem bereicherten Bild reduziert wird.

7.  Verfahren nach einem der vorstehenden Ansprüche, das weiter vor dem Schritt (170) zum Aufbauen eines Schwellenbildes einen Schritt (110) zur Rauschunterdrückung des ursprünglichen Bildes umfasst, wodurch sich ein rauschunterdrücktes Bild ergibt, wobei eine Verarbeitung zur Rauschunterdrückung auf das ursprüngliche Bild abgewandt wird, wobei das rauschunterdrückte Bild in der Folge des Verfahrens anstelle des ursprünglichen Bildes verwendet wird.

8.  Verfahren nach Anspruch 7, wobei der Schritt (110) zur Rauschunterdrückung einen Vorgang der Faltung umfasst, die zwischen dem ursprünglichen Bild und einem Rauschunterdrückungsfilter durchgeführt wird, wobei das Rauschunterdrückungsfilter aus einer Reihe von Punkten gebildet ist, die einen n-Hyperblock in einem Raum mit $n$ Dimensionen definieren, wobei $n$ eine ganze Zahl größer oder gleich zwei ist, wobei jeder Punkt des Filters einem numerischen Wert zugeordnet ist, wobei das Filter eine erste Teilreihe von Punkten beinhaltet, die eine n-Kugel bilden und eine zweite Teilreihe von Punkten, welche die Punkte umfasst, die nicht der ersten Teilreihe angehören, wobei der Wert der Punkte der ersten Teilreihe vom Zentrum zum Umfang der n-Kugel in Abhängigkeit von Koeffizienten bestimmt wird, die durch ein polynominales Annäherungsverfahren in der Art Savitzky-Golay berechnet werden, wobei der Wert der Punkte der zweiten Teilreihe null ist.

9.  Verfahren nach einem der vorstehenden Ansprüche, das weiter vor dem Schritt (170) zum Aufbauen eines Schwellenbildes einen Schritt (130) zum Erhöhen der Auflösung des ursprünglichen Bildes umfasst, wodurch sich ein superaufgelöstes Bild ergibt, wobei das superaufgelöste Bild durch Erhöhen der räumlichen Auflösung des ursprünglichen Bildes erzeugt wird, wobei das superaufgelöste Bild in der Folge des Verfahrens anstelle des ursprünglichen Bildes verwendet wird.

10. Verfahren nach einem der vorstehenden Ansprüche, das weiter vor dem Schritt zum Aufbauen eines Schwellenbildes einen Schritt (140) zum Glätten des ursprünglichen Bildes umfasst, wodurch sich ein geglättetes Bild ergibt, wobei das geglättete Bild in der Folge des Verfahrens anstelle des ursprünglichen Bildes verwendet wird.

11. Verfahren nach Anspruch 10, wobei der Schritt (140) zum Glätten einen Vorgang zum Falten beinhaltet, der zwischen dem ursprünglichen Bild und einem Glättungsfilter (40, 60) durchgeführt wird, wobei das Glättungsfilter aus einer Reihe von Punkten gebildet ist, die einen n-Hyperblock in einem Raum mit $n$ Dimensionen definieren, wobei $n$ eine ganze Zahl größer oder gleich zwei ist, wobei jeder Punkt des Filters einem numerischen Wert zugeordnet ist, wobei das Filter eine erste Teilreihe von Punkten beinhaltet, die eine n-Kugel bilden und eine zweite Teilreihe von Punkten, welche die Punkte umfasst, die nicht der ersten Teilreihe angehören, wobei der Wert der Punkte der ersten Teilreihe vom Zentrum zum Umfang der n-Kugel in Abhängigkeit von Koeffizienten bestimmt wird, die durch ein polynominales Annäherungsverfahren in der Art Savitzky-Golay berechnet werden, wobei der Wert der Punkte der zweiten Teilreihe null ist.

**12.** Verfahren nach einem der Ansprüche 8 und 11,

wobei der Wert $F(i_1, i_2, ..., i_n)$ der Punkte des Filters null wert ist, wenn r > s ist, und wenn r ≤ s ist, und proportional zu:

$$A_s(r) = 3s^2 + 3s - 1 - 5r^2$$

mit per Definition
s = (d-1)/2, wobei d den ungeraden Durchmesser der n-Kugel darstellt, und
$r = \sqrt{i_1^2 + i_2^2 + \cdots + i_n^2}$ , wobei $i_1, i_2, ..., i_n$ die n Entfernungsindizes in Bezug auf das Zentrum der n-Kugel für jede Dimension des Raumes des Filters definieren, wobei diese Entfernungsindizes ganze Zahlen sind, die zwischen -s und s variieren,
oder
wobei der Wert $F(i_1, i_2, ..., i_n)$ der Punkte des Filter null wert ist, wenn r > s ist, und wenn r ≤ s ist, und proportional zu:

$$A_s(r) = (15s^4 + 30s^3 - 35s^2 - 50s + 12) - 35(2s^2 + 2s - 3)r^2 + 63r^4$$

mit per Definition
s = (d-1)/2, wobei d den ungeraden Durchmesser der n-Kugel darstellt, und
$r = \sqrt{i_1^2 + i_2^2 + \cdots + i_n^2}$ , wobei $i_1, i_2, ..., i_n$ die n Entfernungsindizes in Bezug auf das Zentrum der n-Kugel für jede Dimension des Raumes des Filters definieren, wobei diese Entfernungsindizes ganze Zahlen sind, die zwischen -s und s variieren.

**13.** Verfahren nach einem der Ansprüche 8 und 11 bis 12,
wobei der Schritt (110) zur Rauschunterdrückung und/oder der Schritt (140) zum Glätten jeweils vor dem Vorgang der Faltung einen Vorgang zur geometrischen Transformation des Filters umfassen, bei dem die Punkte der ersten Teilreihe einer geometrischen Transformation unterzogen werden.

**14.** Verfahren nach einem der vorstehenden Ansprüche, das weiter vor dem Schritt (170) zum Aufbauen eines Schwellenbildes einen Schritt (150) zum Subtrahieren eines kontinuierlichen Hintergrunds umfasst, wodurch sich ein subtrahiertes Bild ergibt, wobei der Wert eines jeden Punktes des subtrahierten Bildes gleich dem Wert des entsprechenden Punktes im ursprünglichen Bild ist, der vom Wert des entsprechenden Punktes in dem Bild mit kontinuierlichem Hintergrund subtrahiert wird.

**Claims**

**1.** A method for processing an initial image formed by a set of points defining a *n*-hyperpatch in a *n*-dimensional space, *n* being an integer greater than or equal to two, each point being associated with a numerical value, the initial image being a microscopy image comprising a set of drops detaching from the noise, the method (100) comprising:

- a step (170) of constructing a thresholded image, in which the value of each point of the thresholded image takes on the zero value if the value of the corresponding point in the initial image is less than a predetermined threshold, and takes on the value of the corresponding point in the initial image otherwise, and
- a step (180) of enriching the thresholded image resulting in an enriched image, said step comprising:

  ○ a sub-step (181) of decomposing the thresholded image into one or more elementary sub-image(s), each elementary sub-image comprising all of the drops of the thresholded image corresponding to a class of drops defined by a predetermined sorting criterion,
  ○ a sub-step (182) of determining the centers of the drops, in which, in each of the elementary sub-images, the center of each drop is determined,
  ○ a sub-step (184) of constructing so-called "idealized" sub-images, in which one idealized sub-image is constructed for each elementary sub-image, each idealized sub-image comprising an idealized drop of the considered class of drops generated at the center of each drop of the corresponding elementary sub-image, each idealized drop integrating information relating to the physics of an imaged sample, the idealized drops being obtained by simulating a perfect image or based on one or more averaged reference experimental drop(s),

- ◦ a sub-step (185) of merging the idealized sub-images, in which the different idealized sub-images are merged to form an idealized image, and
- ◦ a sub-step (186) of constructing the enriched image, in which the idealized image is merged with the thresholded image to form the enriched image.

2. The method according to claim 1, wherein the sorting criterion comprises at least one criterion relating to a morphological parameter of the drops, to their surface, to their average numerical value or to their standard deviation.

3. The method according to one of claims 1 and 2, wherein the step (180) of enriching the thresholded image further comprises, between the sub-step (182) of determining the centers of the drops and the sub-step (184) of constructing the idealized sub-images, a sub-step (183) of re-aligning the centers of the drops resulting in re-aligned sub-images, in which each re-aligned sub-image is obtained through a geometric transformation of the corresponding elementary sub-image, so that the centers of the drops are aligned according to at least one set of axes parallel to each other in each re-aligned sub-image, the re-aligned sub-images being used in the remainder of the method instead of the elementary sub-images.

4. The method according to one of the preceding claims, further comprising a step (190) of constructing a diffractogram, said step of constructing a diffractogram comprising:

   - a sub-step (192) of adding a peripheral boundary, in which a peripheral boundary formed of a set of points in a $n$-dimensional space is added at the periphery of the enriched image to result in an augmented image, each point of the peripheral boundary being associated with the zero value, and
   - a sub-step (193) of applying a Fourier-type transform to the augmented image to form the diffractogram.

5. The method according to claim 4, wherein the step (190) of constructing a diffractogram further comprises, subsequently to the sub-step (193) of applying a Fourier-type transform, a thresholding sub-step (194) resulting in a thresholded diffractogram, in which the value of each point of the thresholded diffractogram takes on the zero value if the value of the corresponding point in the diffractogram is lower than a predetermined threshold.

6. The method according to one of claims 4 and 5, wherein the step (190) of constructing a diffractogram further comprises, prior to the sub-step (193) of applying a Fourier-type transform, an erosion sub-step (191), in which a dimension of each drop in the enriched image is reduced.

7. The method according to one of the preceding claims, further comprising, prior to the step (170) of constructing a thresholded image, a step (110) of denoising the initial image resulting in a denoised image, in which a denoising processing is applied to the initial image, the denoised image being used in the rest of the method instead of the initial image.

8. The method according to claim 7, wherein the denoising step (110) comprises a convolution operation performed between the initial image and a denoising filter, the denoising filter being formed of a set of points defining a $n$-hyperpatch in a $n$-dimensional space, $n$ being an integer greater than or equal to two, each point of the filter being associated with a numerical value, the filter including a first subset of points forming a $n$-ball and a second subset of points comprising the points not belonging to the first subset, the value of the points of the first subset being determined, from the center towards the periphery of the $n$-ball, according to coefficients calculated by a Savitzky-Golay type polynomial approximation method, the value of the points of the second subset being zero.

9. The method according to one of the preceding claims, further comprising, prior to the step (170) of constructing a thresholded image, a step (130) of increasing the resolution of the initial image, resulting in a super-resolved image, in which the super-resolved image is generated by increasing the spatial resolution of the initial image, the super-resolved image being used in the rest of the method instead of the initial image.

10. The method according to one of the preceding claims, further comprising, prior to the step of constructing a thresholded image, a step (140) of smoothing the initial image, resulting in a smoothed image, the smoothed image being used in the rest of the method instead of the initial image.

**11.** The method according to claim 10, wherein the smoothing step (140) includes a convolution operation performed between the initial image and a smoothing filter (40, 60), the smoothing filter being formed of a set of points defining a $n$-hyperpatch in a $n$-dimensional space, $n$ being an integer greater than or equal to two, each point of the filter being associated with a numerical value, the filter including a first subset of points forming a $n$-ball and a second subset of points comprising the points not belonging to the first subset, the value of the points of the first subset being determined, from the center towards the periphery of the $n$-ball, according to coefficients calculated by a Savitzky-Golay type polynomial approximation method, the value of the points of the second subset being zero.

**12.** The method according to one of claims 8 and 11,

wherein the value $F(i_1, i_2, ..., i_n)$ of the points of the filter amounts to zero if $r > s$ and, if $r \leq s$, is proportional to:

$$A_s(r) = 3s^2 + 3s - 1 - 5r^2$$

with, by definition
$s = (d - 1)/2$, where d represents the odd diameter of the $n$-ball, and
$$r = \sqrt{i_1^2 + i_2^2 + \cdots + i_n^2}$$ , where $i_1, i_2 \ldots i_n$ define the $n$ indexes of distance with respect to the center of the n-ball for each dimension of the space of the filter, these distance indexes being integers varying between $-s$ and $s$,
or
wherein the value $F(i_1, i_2, ..., i_n)$ of the points of the filter amounts to zero if $r > s$ and, if $r \leq s$, is proportional to:

$$A_s(r) = (15s^4 + 30s^3 - 35s^2 - 50s + 12) - 35(2s^2 + 2s - 3)r^2 + 63r^4$$

with, by definition
$s = (d - 1)/2$, where $d$ represents the odd diameter of the $n$-ball, and
$$r = \sqrt{i_1^2 + i_2^2 + \cdots + i_n^2}$$ , where $i_1, i_2 \ldots i_n$ define the $n$ indexes of distance with respect to the center of the $n$-ball for each dimension of the space of the filter, these distance indexes being integers varying between $-s$ and $s$.

**13.** The method according to one of claims 8 and 11 to 12, wherein each of the denoising step (110) and/or the smoothing step (140) comprises, prior to the convolution operation, an operation of geometric transformation of the filter, in which the points of the first subset undergo a geometric transformation.

**14.** The method according to one of the preceding claims, further comprising, prior to the step (170) of constructing a thresholded image, a continuous background subtraction step (150) resulting in a subtracted image, the value of each point of the subtracted image being equal to the value of the corresponding point in the initial image subtracted by the value of the corresponding point in a continuous background image.

<u>100</u>

Image initiale

↓

Débruitage de l'image — 110

Image débruitée

↓

Correction de distorsion — 120

Image réalignée

↓

Augmentation de la résolution de l'image — 130

Image super-résolue

↓

Lissage de l'image — 140

Image lissée

↓

Soustraction de fond — 150

Image soustraite

↓

Normalisation — 160

Image normalisée

↓

Construction d'une image seuillée — 170

Image seuillée

↓

Enrichissement de l'image seuillée — 180

Image enrichie

↓

Construction d'un diffractogramme — 190

↓

Diffractogramme super-résolu

FIG.1

FIG.2A

FIG.2B

FIG.3A

FIG.3B

FIG.4

FIG.5A

FIG.5B

FIG.6

FIG.7A

FIG.7B

FIG.8A

FIG.8B

FIG.9

FIG.10A

FIG.10B

Image seuillée

180 ⌇

181 ─ Décomposition en sous-images élémentaires

182 ─ Détermination des centres des gouttes

183 ─ Réalignement des gouttes

184 ─ Construction de sous-images idéalisées

185 ─ Fusion des sous-images idéalisées

186 ─ Construction d'une image enrichie

Image enrichie

FIG.11

FIG.12A

FIG.12B

Image enrichie

190

Érosion des gouttes — 191

Ajout d'un pourtour périphérique de zéros — 192

Application d'une transformée de type Fourier — 193

Seuillage — 194

Diffractogramme super-résolu

## FIG.13

## FIG.14A

## FIG.14B

FIG.15A

FIG.15B

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005055145 A1

**Littérature non-brevet citée dans la description**

- **L. SCHERMELLEH et al.** Super-resolution microscopy demystified. *Nature Cell Biology,* 2019, vol. 21, 72-84
- **R. CLAVEAU et al.** Structure-dependent amplification for denoising and background correction in Fourier ptychographic microscopy. *Optics express,* vol. 28 (24), 2020
- **L. I. RUDIN ; S. OSHER ; E. FATEMI.** Nonlinear total variation based noise removal algorithms. *Physica D,* 1992, vol. 60 (1), 259-268
- **SAVITZKY, A. ; GOLAY, M. J. E.** Smoothing and différentiation of data by simplified least-squares procedures. *Analytical Chemistry,* 1964, vol. 36, 1627-1639
- **P. A. GORRY.** General least-squares smoothing and différentiation by the convolution (Savitzky-Golay) method. *Anal. Chem.,* 1990, vol. 62 (6), 570-573
- **THORNLEY, DAVID J.** Anisotropic Multidimensional Savitzky Golay kernels for Smoothing, Différentiation and Reconstruction (PDF) (Technical report). Imperial College Department of Computing, 2006, vol. 2066, 8
- **A. BUADES et al.** A review of image denoising algorithms, with a new one. *Multiscale Modeling and Simulation,* 2005, vol. 4, 490-530
- **GOYAL, BHAWNA et al.** Image Denoising Review: From classical to state-of-the-art approaches. *Information Fusion,* vol. 55
- **X. SANG ; J. M. LEBEAU.** Revolving scanning transmission electron microscopy : correcting sample drift distorsion without prior knowledge. *Ultramicroscopy,* 2014, vol. 1338, 28-35
- **L. I. RUDIN et al.** Nonlinear total variation based noise removal algorithms. *Physica D,* 1992, vol. 60 (1), 259-268
- **T. CHAN et al.** High order total variation-based image restoration. *SIAM J. Sci. Comput.,* 2000, vol. 22 (2), 503-516
- **G. CHANTAS et al.** Variational Bayasian image restoration with a product of spatially weighted total variation image priors. *IEEE Trans. Image Proc.,* 2010, vol. 19 (2), 351-362
- **H. H. MADDEN.** Comments on Savitzky-Golay Convolution Method for Least-Squares Fit Smoothing and Differentiation of Digital Data. *Analytical Chemistry,* 1978, vol. 50, 1383-1386
- **J. BERNSEN.** Dynamic Thresholding of Grey-Level Images. *Proc. Of the 8th Int. Conf. On Pattern Recognition,* 1986